(19)

**Europäisches Patentamt**
**European Patent Office**
**Office européen des brevets**

(11) **EP 4 582 895 A1**

(12) **EUROPEAN PATENT APPLICATION**

(43) Date of publication:
**09.07.2025 Bulletin 2025/28**

(21) Application number: **24205127.4**

(22) Date of filing: **08.10.2024**

(51) International Patent Classification (IPC):
*G05D 1/661* (2024.01)    *G05D 1/229* (2024.01)
*G05D 1/243* (2024.01)    *G05D 1/244* (2024.01)
*G05D 1/686* (2024.01)    *A01D 34/00* (2006.01)
*G06T 7/80* (2017.01)    *G05D 101/20* (2024.01)
*G05D 105/15* (2024.01)    *G05D 107/20* (2024.01)
*G05D 109/10* (2024.01)    *G05D 111/10* (2024.01)
*G05D 111/63* (2024.01)

(52) Cooperative Patent Classification (CPC):
**G05D 1/2435; A01D 34/008; G05D 1/2297;**
**G05D 1/2446; G05D 1/661; G05D 1/686;**
G05D 2101/20; G05D 2105/15; G05D 2107/23;
G05D 2109/10; G05D 2111/10; G05D 2111/14;
G05D 2111/17; G05D 2111/64

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **05.01.2024 CN 202410021420**
**09.01.2024 CN 202410030288**
**23.01.2024 CN 202410098903**

(71) Applicant: **Nanjing Chervon Industry Co., Ltd.**
**Nanjing, Jiangsu 211106 (CN)**

(72) Inventors:
• **GAO, Hongchen**
**Nanjing (CN)**
• **WANG, Zhao**
**Nanjing (CN)**

(74) Representative: **Sun, Yiming**
**HUASUN Patent- und Rechtsanwälte**
**Friedrichstraße 33**
**80801 München (DE)**

(54) **SELF-PROPELLED DEVICE SYSTEM**

(57)    Provided is a self-propelled device system. The system includes a self-propelled mower and a charging pile. The charging pile is used for charging the self-propelled device. The self-propelled mower includes a body; a traveling wheel assembly for supporting the body; a camera assembly mounted on the body and used for collecting an image around the self-propelled device; and a controller communicatively connected to the camera assembly. The controller is configured to determine the relative posture between the charging pile and the self-propelled mower according to the image.

FIG. 2

## Description

### TECHNICAL FIELD

The present application relates to the technical field of power tools and, in particular, to a self-propelled device system and a method for determining a posture of a charging pile thereof.

### BACKGROUND

With the rapid development of power tool technology, self-propelled devices have gradually attracted attention and are widely used in various working scenarios. For example, the self-propelled device may be a self-propelled mower for a mowing operation. An image collection device (such as a camera) is usually deployed in the self-propelled device and achieves the positioning and movement of the self-propelled device.

Before the self-propelled mower is used to perform the mowing operation, the boundary of the working region of the mower needs to be determined so that the range of the working region of the mower can be determined based on the boundary of the working region. In the related art, physical encirclement lines are manually mounted on the boundary of the working region of the mower in advance. When the mower performs the mowing operation, the boundary of the working region is positioned by identifying the physical encirclement lines, thereby positioning the range of the working region determined by the boundary of the working region. However, this solution needs to rely on manually mounted physical encirclement lines, which is time-consuming and labor-intensive and requires certain economic costs.

After the mowing operation is completed, the self-propelled device needs to determine the accurate posture information of a charging pile when returning to the charging pile to charge. In the existing art, the charging pile is positioned using vision technology or laser sensor technology. However, due to the limitations of vision technology or laser sensor technology, the positioning result is inaccurate, affecting the recharging efficiency of the self-propelled device.

When the image collection device in the self-propelled device works for a long time, structural problems such as aging of the lens or circuit board may occur, causing the related parameters of the image collection device to deviate from those in the actual situation, that is, the parameters are inaccurate, affecting the working accuracy of the image collection device. Therefore, to ensure the working accuracy of the image collection device, the related parameters of the image collection device need to be accurately calibrated.

This part provides background information related to the present application, and the background information is not necessarily the existing art.

## SUMMARY

An object of the present application is to solve or at least alleviate part or all of the preceding problems. To achieve the preceding object, the present application adopts the technical solutions below.

A self-propelled device system includes a self-propelled device and a charging pile. The charging pile is used for charging the self-propelled device. The self-propelled device includes a body; a traveling wheel assembly for supporting the body; a camera assembly mounted on the body and used for collecting an image around the self-propelled device; and a controller communicatively connected to the camera assembly and determining the relative posture between the charging pile and the self-propelled device according to the image.

In some examples, the controller pre-stores three-dimensional feature points on the charging pile, where the three-dimensional feature points are pre-calibrated based on preset feature information.

The controller is configured to perform the operations below.

A target image corresponding to the charging pile collected by the camera assembly is acquired, and feature points are extracted from the target image based on the preset feature information so that two-dimensional feature points are obtained.

The parameter of the camera assembly is calibrated based on the correspondence between the two-dimensional feature points and the three-dimensional feature points.

In some examples, the camera assembly includes a binocular camera, the binocular camera includes a left camera and a right camera, the target image includes a first image and a second image, the first image is collected by the left camera, and the second image is collected by the right camera.

Extracting the feature points from the target image based on the preset feature information to obtain the two-dimensional feature points includes the steps below.

Feature points are extracted from the first image based on the preset feature information so that first image two-dimensional feature points corresponding to the first image are obtained.

Feature points are extracted from the second image based on the preset feature information so that second image two-dimensional feature points corresponding to the second image are obtained.

Calibrating the parameter of the camera assembly based on the correspondence between the two-dimensional feature points and the three-dimensional feature points includes the steps below.

A first intrinsic parameter of the left camera is determined based on the correspondence between the first image two-dimensional feature points and the three-dimensional feature points.

A second intrinsic parameter of the right camera is determined based on the correspondence between the second image two-dimensional feature points and the three-dimensional feature points.

In some examples, an intrinsic parameter includes the focal length and the optical center.

In some examples, calibrating the parameter of the camera assembly based on the correspondence between the two-dimensional feature points and the three-dimensional feature points further includes the steps below.

Based on the first intrinsic parameter and the correspondence between the first image two-dimensional feature points and the three-dimensional feature points, a first extrinsic parameter of the left camera is determined, where the first extrinsic parameter is used for representing relative posture information between the left camera and the charging pile.

Based on the second intrinsic parameter and the correspondence between the second image two-dimensional feature points and the three-dimensional feature points, a second extrinsic parameter of the right camera is determined, where the second extrinsic parameter is used for representing relative posture information between the right camera and the charging pile.

A third extrinsic parameter of the binocular camera is determined according to the first extrinsic parameter and the second extrinsic parameter, where the third extrinsic parameter is used for representing relative posture information between the left camera and the right camera.

In some examples, the preset feature information includes structural information and additional mark information, where the structural information includes at least one of the following: edge information, corner point information, and texture information, the additional mark information includes preset pattern information, and the preset pattern information includes quick-response code (QR code) information.

In some examples, the self-propelled device system further includes an infrared laser, and the camera assembly further includes a low-light camera.

In some examples, the controller is further used for performing the operations below.

A working scenario of the self-propelled device is determined, where the working scenario is daytime or nighttime.

A working mode of the camera assembly in the self-propelled device is determined according to the working scenario.

If the working scenario is daytime, it is determined that the working mode of the camera assembly is the low-light camera and a binocular camera in a first state or merely a binocular camera in a first state, where the first state is that the infrared laser is in an off state.

If the working scenario is nighttime, it is determined that the working mode of the camera assembly is the low-light camera and the binocular camera in a second state, where the second state is that the infrared laser is in an on state.

In some examples, the camera assembly includes a binocular camera, and the controller is used for performing the operations below.

Target detection of a preset category is performed on a current image collected by the camera assembly so that candidate detection bounding boxes are obtained.

One of the candidate detection bounding boxes is determined as a target detection bounding box.

Based on the target detection bounding box, the traveling wheel assembly is controlled to move.

In some examples, the candidate detection bounding boxes are multiple bounding boxes.

Correspondingly, determining one of the candidate detection bounding boxes as the target detection bounding box includes the steps below.

A current depth map corresponding to the current image is determined based on an image collected by the binocular camera.

Candidate depth information corresponding to each of the candidate detection bounding boxes is determined according to the current depth map.

Information statistics is performed on each piece of candidate depth information so that depth statistical information corresponding to each of the candidate detection bounding boxes is obtained.

A candidate detection bounding box corresponding to the minimum value in the depth statistical information is used as the target detection bounding box.

In some examples, the candidate detection bounding boxes are multiple bounding boxes.

Correspondingly, determining one of the candidate detection bounding boxes as the target detection bounding box includes the steps below.

A reference image is acquired, where the reference image includes a reference object of the preset category.

The target detection of the preset category is performed on the reference image so that a reference detection bounding box is obtained.

The similarity between the reference detection bounding box and each of the candidate detection bounding boxes is determined.

A candidate detection bounding box with the maximum similarity is used as the target detection bounding box.

In some examples, based on the target detection bounding box, controlling the traveling wheel assembly to move includes the steps below.

Target depth information corresponding to the target detection bounding box is determined.

An intrinsic parameter of the binocular camera is acquired.

The target detection bounding box is converted into a three-dimensional space according to the target depth information and the intrinsic parameter so that target point cloud information corresponding to the target detection bounding box is obtained.

Based on the target point cloud information, the traveling wheel assembly is controlled to move.

In some examples, the self-propelled device system includes a self-propelled device, the self-propelled device includes a camera assembly and an auxiliary device, the auxiliary device includes a laser sensor or the auxiliary device includes an external positioning unit and a memory, the memory stores a preset position and a three-dimensional model of the charging pile, and a method for determining the posture includes the steps below.

An image is collected through the camera assembly.

According to the image and the auxiliary device, the rough posture of the charging pile relative to the self-propelled device and auxiliary information are determined.

The accurate posture of the charging pile relative to the self-propelled device is calculated according to the rough posture and the auxiliary information.

In some examples, the auxiliary device includes the laser sensor.

According to the image and the auxiliary device, determining the rough posture of the charging pile relative to the self-propelled device and the auxiliary information includes the steps below.

Iconic information of the charging pile is identified from the image.

The rough posture of the charging pile relative to the self-propelled device is calculated according to the iconic information.

Laser light is emitted through the laser sensor.

According to the iconic information, target laser point cloud data corresponding to the charging pile is screened out.

A yaw angle is calculated using the target laser point cloud data, and the yaw angle is used as the auxiliary information.

In some examples, the auxiliary device includes the external positioning unit and the memory.

According to the image and the auxiliary device, determining the rough posture of the charging pile relative to the self-propelled device and the auxiliary information includes the steps below.

The current position of the self-propelled device is acquired through the external positioning unit.

Whether the charging pile exists in the image is detected using a deep learning program.

When the confidence of the charging pile detected from the image is greater than or equal to a preset threshold, the rough posture of the charging pile relative to the self-propelled device is calculated according to the preset position of the charging pile and the current position of the self-propelled device.

A rendered image of the charging pile is obtained according to the three-dimensional model of the charging pile and the image.

Feature matching is performed on the image and the rendered image of the charging pile, feature points are calculated, and the feature points are used as the auxiliary information.

An object of the present application is to provide a self-propelled device system for camera assembly parameter configuration.

To achieve the preceding object, the present application adopts the technical solutions below.

A self-propelled device system for camera assembly parameter configuration includes a self-propelled device and a charging pile. The charging pile is used for charging the self-propelled device. The self-propelled device includes a body; a traveling wheel assembly for supporting the body; a camera assembly mounted on the body and used for collecting an image around the self-propelled device; and a controller communicatively connected to the camera assembly and pre-storing three-dimensional feature points on the charging pile, where the three-dimensional feature points are pre-calibrated based on preset feature information. The controller is configured to acquire a target image corresponding to the charging pile collected by the camera assembly, extract feature points from the target image based on the preset feature information to obtain two-dimensional feature points, and calibrate the parameter of the camera assembly based on the correspondence between the two-dimensional feature points and the three-dimensional feature points.

In some examples, the camera assembly includes a binocular camera, and the binocular camera includes a left camera and a right camera.

In some examples, the target image includes a first image and a second image, the first image is collected by the left camera, and the second image is collected by the right camera.

In some examples, extracting the feature points from the target image based on the preset feature information to obtain the two-dimensional feature points includes: extracting feature points from the first image based on the preset feature information to obtain first image two-dimensional feature points corresponding to the first image; and extracting feature points from the second image based on the preset feature information to obtain second image two-dimensional feature points corresponding to the second image.

In some examples, calibrating the parameter of the camera assembly based on the correspondence between the two-dimensional feature points and the three-dimensional feature points includes: determining a first intrinsic parameter of the left camera based on the correspondence between the first image two-dimensional feature points and the three-dimensional feature points; and determining a second intrinsic parameter of the right camera based on the correspondence between the second image two-dimensional feature points and the three-dimensional feature points.

In some examples, an intrinsic parameter includes the focal length and the optical center.

In some examples, calibrating the parameter of the camera assembly based on the correspondence between the two-dimensional feature points and the three-dimensional feature points includes: based on the first intrinsic parameter and the correspondence between the first image two-dimensional feature points and the three-dimensional feature points, determining a first extrinsic parameter of the left camera, where the first extrinsic parameter is used for representing relative posture information between the left camera and the charging pile; based on the second intrinsic parameter and the correspondence between the second image two-dimensional feature points and the three-dimensional feature points, determining a second extrinsic parameter of the right camera, where the second extrinsic parameter is used for representing relative posture information between the right camera and the charging pile; and determining a third extrinsic parameter of the binocular camera according to the first extrinsic parameter and the second extrinsic parameter, where the third extrinsic parameter is used for representing relative posture information between the left camera and the right camera.

In some examples, the preset feature information includes structural information and additional mark information.

In some examples, the structural information includes at least one of the following: edge information, corner point information, and texture information.

In some examples, the additional mark information includes preset pattern information, and the preset pattern information includes QR code information.

In some examples, the self-propelled device system further includes an infrared laser, and the camera assembly further includes a low-light camera.

In some examples, the controller is further used for determining a working scenario of the self-propelled device, where the working scenario is daytime or nighttime; and determining a working mode of the camera assembly in the self-propelled device according to the working scenario.

In some examples, determining the working scenario of the self-propelled device includes determining the working scenario of the self-propelled device based on the working time of the self-propelled device or the ambient brightness of the self-propelled device.

In some examples, determining the working mode of the camera assembly in the self-propelled device according to the working scenario includes: if the working scenario is daytime, determining that the working mode of the camera assembly is the low-light camera and a binocular camera in a first state or merely a binocular camera in a first state, where the first state is that the infrared laser is in an off state; and if the working scenario is nighttime, determining that the working mode of the camera assembly is the low-light camera and the binocular camera in a second state, where the second state is that the infrared laser is in an on state.

The present application has the beneficial effects below.

A self-propelled device system for camera assembly parameter configuration provided in the present application includes a self-propelled device and a charging pile. The charging pile is used for charging the self-propelled device. The self-propelled device includes a body; a traveling wheel assembly for supporting the body; a camera assembly mounted on the body and used for collecting an image around the self-propelled device; and a controller communicatively connected to the camera assembly and pre-storing three-dimensional feature points on the charging pile, where the three-dimensional feature points are pre-calibrated based on preset feature information. The controller is configured to acquire a target image corresponding to the charging pile collected by the camera assembly, extract feature points from the target image based on the preset feature information to obtain two-dimensional feature points, and calibrate the parameter of the camera assembly based on the correspondence between the two-dimensional feature points and the three-dimensional feature points. In the self-propelled device system provided in the present application, the parameter of the camera assembly can be quickly and accurately calibrated based on the correspondence between the three-dimensional feature points of the charging pile and the two-dimensional feature points of the image of the charging pile under the same feature information, thereby solving the problem of inaccurate calibration of the parameter of the camera assembly caused by structural factors such as aging of the lens or circuit board of the camera assembly, which is conducive to improving the working accuracy of the camera assembly.

An object of the present application is to provide a self-propelled mower based on target following.

To achieve the preceding object, the present application adopts the technical solutions below.

A self-propelled mower based on target following includes a body; a traveling wheel assembly for supporting the body; a camera assembly mounted on the body and used for collecting an image around the self-propelled mower; and a controller communicatively connected to the camera assembly. The controller is used for performing target detection of a preset category on a current image collected by the camera assembly to obtain candidate detection bounding boxes; determining one of the candidate detection bounding boxes as a target detection bounding box; and based on the target detection bounding box, controlling the traveling wheel assembly to move.

In some examples, the camera assembly includes a binocular camera, and the binocular camera includes a left camera and a right camera.

In some examples, the current image is an RGB image or a grayscale image collected by the left camera or the right camera.

In some examples, the candidate detection bounding boxes are multiple bounding boxes. Correspondingly, determining one of the candidate detection bounding boxes as the target detection bounding box includes: determining a current depth map corresponding to the current image based on an image collected by the binocular camera; determining candidate depth information corresponding to each of the candidate detection bounding boxes according to the current depth map; performing information statistics on each piece of candidate depth information to obtain depth statistical information corresponding to each of the candidate detection bounding boxes; and using a candidate detection bounding box corresponding to the minimum value in the depth statistical information as the target detection bounding box.

In some examples, determining the current depth map corresponding to the current image based on the image collected by the binocular camera includes: using an RGB image or a grayscale image collected by the left camera of the binocular camera as the first image, and using an RGB image or a grayscale image collected by the right camera of the binocular camera as the second image; determining a current parallax map between the first image and the second image; and determining the current depth map corresponding to the current image according to the current parallax map.

In some examples, determining the candidate depth information corresponding to each of the candidate detection bounding boxes according to the current depth map includes: performing pixel alignment between the current depth map and each of the candidate detection bounding boxes; and determining the candidate depth information corresponding to each of the candidate detection bounding boxes based on the current depth map after pixel alignment.

In some examples, performing information statistics on each piece of candidate depth information to obtain the depth statistical information corresponding to each of the candidate detection bounding boxes includes: determining an average depth value of the candidate depth information corresponding to each candidate detection bounding box; and using the average depth value as the depth statistical information corresponding to the candidate detection bounding box.

In some examples, performing information statistics on each piece of candidate depth information to obtain the depth statistical information corresponding to each of the candidate detection bounding boxes includes: determining a depth median of the candidate depth information corresponding to each candidate detection bounding box; and using the depth median as the depth statistical information corresponding to the candidate detection bounding box.

In some examples, performing information statistics on each piece of candidate depth information to obtain the depth statistical information corresponding to each of the candidate detection bounding boxes includes: acquiring depth information at the position of the central pixel of each candidate detection bounding box and using the depth information as the depth statistical information corresponding to each candidate detection bounding box.

In some examples, the candidate detection bounding boxes are multiple bounding boxes. Correspondingly, determining one of the candidate detection bounding boxes as the target detection bounding box includes: acquiring a reference image, where the reference image includes a reference object of the preset category; performing the target detection of the preset category on the reference image to obtain a reference detection bounding box; determining the similarity between the reference detection bounding box and each of the candidate detection bounding boxes; and using a candidate detection bounding box with the maximum similarity as the target detection bounding box.

In some examples, based on the target detection bounding box, controlling the traveling wheel assembly to move includes: determining target depth information corresponding to the target detection bounding box; converting the target detection bounding box into a three-dimensional space according to the target depth information to obtain target point cloud information corresponding to the target detection bounding box; and based on the target point cloud information, controlling the traveling wheel assembly to move.

In some examples, converting the target detection bounding box into the three-dimensional space according to the target depth information includes: acquiring an intrinsic parameter of the binocular camera; and converting the target detection bounding box into the three-dimensional space according to the target depth information and the intrinsic parameter.

In some examples, based on the target point cloud information, controlling the traveling wheel assembly to move includes: determining target centroid coordinates corresponding to the target point cloud information; and according to the target centroid coordinates, controlling the traveling wheel assembly to move.

In some examples, the preset category is human.

In some examples, performing target detection of the preset category on the current image collected by the camera assembly includes: based on a preset deep learning model, performing target detection of the preset category on the current image collected by the camera assembly, where the preset deep learning model is one of a convolutional neural network (CNN), a region-based convolutional neural network (R-CNN), a Single Shot MultiBox Detector (SSD), and You Only Look Once (YOLO).

The present application has the beneficial effects below.

A self-propelled mower based on target following provided in the present application includes a body; a traveling wheel assembly for supporting the body; a camera assembly mounted on the body and used for collecting an image around the self-propelled mower; and a controller communicatively connected to the camera assembly. The controller is used for performing target detection of a preset category on a current image collected by the camera assembly to obtain candidate detection bounding boxes; determining one of the candidate detection bounding boxes as a target detection bounding box; and based on the target detection bounding box, controlling the traveling wheel assembly to move. In the present application, the camera assembly of the self-propelled mower is used to perform target detection of the preset category and determine the following object of the self-propelled mower based on a target detection result. In this manner, the boundary of the working region of the self-propelled mower is determined according to a target following result, and manual deployment of physical encirclement lines is not required, thereby effectively saving manpower and material resources and improving the efficiency of the self-propelled mower in identifying the boundary of the working region.

An object of the present application is to provide a method for determining the posture of a charging pile of a self-propelled device system.

To achieve the preceding object, the present application adopts the technical solutions below.

A method for determining the posture of a charging pile of a self-propelled device system is provided. The self-propelled device system includes a self-propelled device, the self-propelled device includes a camera assembly and an auxiliary device, the auxiliary device includes a laser sensor or the auxiliary device includes an external positioning unit and a memory, the memory stores a preset position and a three-dimensional model of the charging pile, and the method for determining the posture includes the steps below.

An image is collected through the camera assembly.

According to the image and the auxiliary device, the rough posture of the charging pile relative to the self-propelled device and auxiliary information are determined.

The accurate posture of the charging pile relative to the self-propelled device is calculated according to the rough posture and the auxiliary information.

In some examples, the auxiliary device includes the laser sensor.

According to the image and the auxiliary device, determining the rough posture of the charging pile relative to the self-propelled device and the auxiliary information includes the steps below.

Iconic information of the charging pile is identified from the image.

The rough posture of the charging pile relative to the self-propelled device is calculated according to the iconic information.

Laser light is emitted through the laser sensor.

A yaw angle between the laser light and the charging pile is calculated, and the yaw angle is used as the auxiliary information.

In some examples, the auxiliary device includes the external positioning unit and the memory.

According to the image and the auxiliary device, determining the rough posture of the charging pile relative to the self-propelled device and the auxiliary information includes the steps below.

The current position of the self-propelled device is acquired through the external positioning unit.

Whether the charging pile exists in the image is detected using a deep learning program.

When the confidence of the charging pile detected from the image is greater than or equal to a preset threshold, the rough posture of the charging pile relative to the self-propelled device is calculated according to the preset position of the charging pile and the current position of the self-propelled device.

Feature points are calculated according to the image and a three-dimensional model of the charging pile, and the feature points are used as the auxiliary information.

In some examples, calculating the yaw angle between the laser light and the charging pile includes the steps below.

According to the iconic information, target laser point cloud data corresponding to the charging pile is screened out.

The yaw angle is calculated using the target laser point cloud data.

In some examples, the iconic information is an identification code.

In some examples, the iconic information is a QR code.

In some examples, the external positioning unit includes a satellite positioning device.

Acquiring the current position of the self-propelled device through the external positioning unit includes the step below.

The current position is determined by receiving satellite signals through the satellite positioning device.

In some examples, calculating the feature points according to the image and the three-dimensional model of the charging pile includes the steps below.

A rendered image of the charging pile is obtained according to the three-dimensional model of the charging pile and the image.

Feature matching is performed on the image and the rendered image of the charging pile, and the feature points are calculated.

In some examples, performing feature matching on the image and the rendered image of the charging pile includes the step below.

Feature matching is performed on the image and the rendered image of the charging pile using the scale-invariant feature transform (SIFT) or speeded up robust features (SURF).

In some examples, calculating the accurate posture of the charging pile relative to the self-propelled device according to the rough posture and the auxiliary information includes the step below.

Scale information of the charging pile is fixed using the rough posture, and in conjunction with the feature points, the accurate posture of the charging pile relative to the self-propelled device in the image is calculated.

The benefit of the present application lies in the following: the rough posture of the charging pile relative to the self-propelled device and the auxiliary information are obtained through the camera assembly and the auxiliary device, and then the accurate posture of the charging pile relative to the self-propelled device is obtained according to the rough posture and the auxiliary information; the rough posture obtained according to the camera assembly is further accurately optimized through the auxiliary information obtained by the auxiliary device, thereby improving the accuracy of determining the posture of the charging pile and ensuring the charging effectiveness of the self-propelled device.

**BRIEF DESCRIPTION OF DRAWINGS**

FIG. 1 is a schematic diagram of a self-propelled device system according to the present application.

FIG. 2 is a schematic view of a self-propelled mower according to the present application.

FIG. 3 is a schematic view of a charging pile according to the present application.

FIG. 4 is a flowchart of a camera assembly parameter configuration (parameter calibration) according to the present application.

FIG. 5 is a schematic diagram of a pinhole imaging model according to the present application.

FIG. 6 is a schematic diagram of a simplified model of FIG. 5 according to the present application.

FIG. 7 is a flowchart of another camera assembly parameter configuration (working mode determination) according to the present application.

FIG. 8 is a schematic diagram illustrating the modules of a controller according to the present application.

FIG. 9 is a schematic diagram illustrating the modules of another controller according to the present application.

FIG. 10 is a flowchart of target following according to the present application.

FIG. 11 is another flowchart of target following according to the present application.

FIG. 12 is a schematic diagram illustrating the modules of another controller according to the present application.

FIG. 13 is a schematic diagram of a method for determining the posture of a charging pile of a self-propelled device system according to an example of the present application.

FIG. 14 is a schematic diagram of a method for determining the posture of a charging pile of a self-propelled device system according to an example of the present application.

FIG. 15 is a schematic diagram of a method for determining the posture of a charging pile of a self-propelled device system according to an example of the present application.

FIG. 16 is a schematic diagram illustrating the modules of an apparatus for determining the posture of a charging pile of a self-propelled device system according to an example of the present application.

**DETAILED DESCRIPTION**

Before any example of the present application is explained in detail, it is to be understood that the present application is not limited to its application to the structural details and the arrangement of components set forth in the following description or illustrated in the preceding drawings.

In the present application, the terms "comprising", "including", "having", or any other variation thereof are intended to cover an inclusive inclusion such that a process, method, article, or device including a series of elements includes not only those series of elements, but also other elements not expressly listed, or elements inherent in the process, method, article, or device. Without further limitations, an element defined by the phrase "comprising a..." does not exclude the presence of additional identical elements in the process, method, article, or device including this element.

In the present application, the term "and/or" is used for describing the association relationship between associated objects, which means that three types of relationships may exist. For example, A and/or B may indicate that A exists alone, A and B exist simultaneously, and B exists alone. In addition, the character "/" in the present application generally indicates the "and/or" relationship between the associated objects before and after the character "/".

In the present application, the terms "connection", "combination", "coupling", and "mounting" may be the direct connection, combination, coupling, or mounting and may also be the indirect connection, combination, coupling, or mounting. Among them, for example, direct connection means that two parts or assemblies are connected together without intermediate pieces, and indirect connection means that two parts or assemblies are separately connected to at least one intermediate piece and the two parts or assemblies are connected to each other by the at least one intermediate piece. In addition, "connection" and "coupling" are not limited to physical or mechanical connections or couplings and may include electrical connections or couplings.

In the present application, it is to be understood by those of ordinary skill in the art that a relative term (such as "about", "approximately", or "basically") used in conjunction with a quantity or a condition includes a stated value and has a meaning dictated by the context. For example, the relative term includes at least a degree of error associated with the measurement of a particular value, a tolerance caused by manufacturing, assembly, and use associated with the particular value, and the like. Such a relative term should also be considered as disclosing the range defined by the absolute values of the two endpoints. The relative term may refer to that an indicated value is added or reduced by a certain percentage (such as 1 %, 5%, 10%, or more). A value not modified by the relative term should also be disclosed as a particular value with a tolerance. In addition, when expressing a relative angular position relationship (for example, basically parallel or basically perpendicular), "basically" may refer to that a certain degree (such as 1 degree, 5 degrees, 10 degrees, or more) is added to or subtracted from the indicated angle.

In the present application, those of ordinary skill in the art will understand that a function implemented by an assembly may be implemented by one assembly, multiple assemblies, one part, or multiple parts. Similarly, a function implemented by a part may be implemented by one part, one assembly, or a combination of parts.

In the present application, the terms "up", "down", "left", "right", "front", "rear", and other orientation words are described based on the orientation or positional relationship shown in the drawings and should not be understood as limitations to the examples of the present application. In addition, in this context, it also needs to be understood that when it is mentioned that an element is connected "above" or "below" another element, the element not only can be directly connected "above" or "below" the other element but also can be indirectly connected "above" or "below" the other element through an intermediate element. Further, it should be understood that orientation words such as the upper side, lower side, left side, right side, front side, and rear side not only represent perfect orientations but also may be understood as lateral orientations. For example, the lower part may include directly below, lower left, lower right, lower front, and lower back.

It is to be noted that the terms such as "first" and "second" in the description, the claims, and the preceding drawings of the present application are used for distinguishing between similar objects and are not necessarily used for describing a particular order or sequence. It is to be understood that data used in this manner are interchangeable where appropriate so that the examples of the present application described herein can be implemented in an order not illustrated or described herein. In addition, the terms "including" and any variations thereof are intended to encompass a nonexclusive inclusion. For example, a process, method, system, product, or device that includes a series of steps or units not only includes the expressly listed steps or units but may also include other steps or units that are not expressly listed or are inherent to such a process, method, product, or device.

In the present application, the terms "controller", "processor", "central processing unit", "CPU", and "MCU" are interchangeable. When a unit such as the "controller", the "processor", the "central processing unit", the "CPU", or the "MCU" is configured to implement specific functions, these functions may be implemented by a single preceding unit or multiple preceding units unless otherwise indicated.

In the present application, the term "device", "module", or "unit" is configured to implement a specific function in the form of hardware or software.

In the present application, the terms "computing", "judging", "controlling", "determining", "identifying", and the like refer to the operations and processes of a computer system or similar electronic computing device (for example, the controller or the processor).

Technical solutions proposed in the present application are further described in detail in conjunction with drawings and examples.

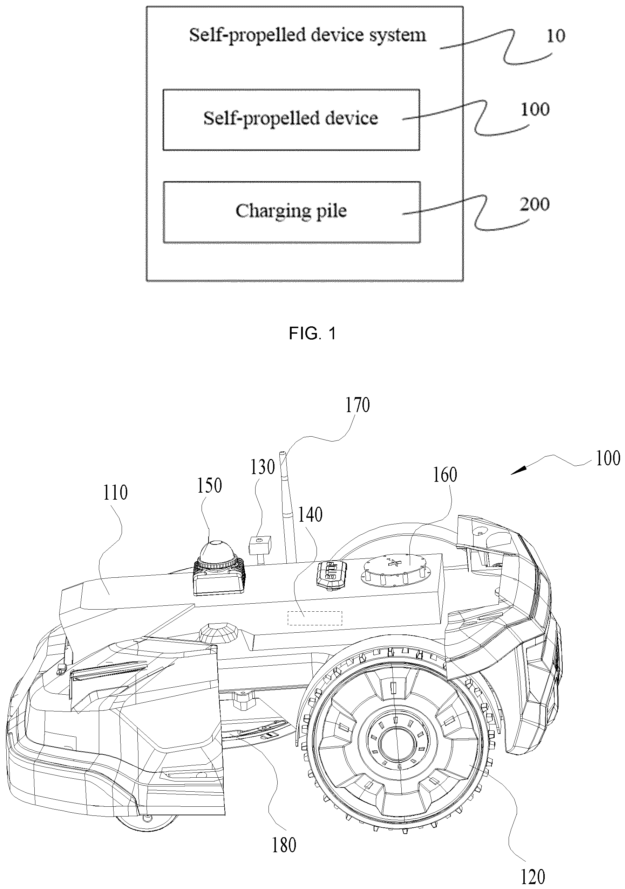

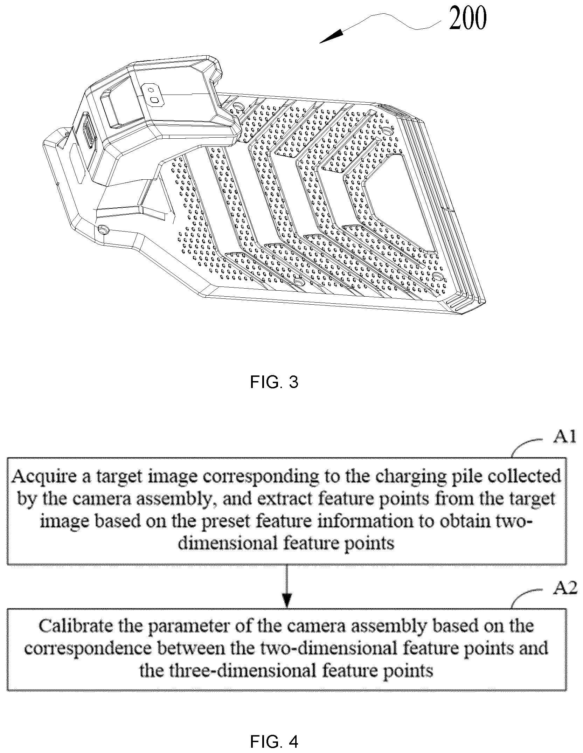

Referring to FIG. 1, a self-propelled device system 10 in this example includes a self-propelled device 100 and a charging pile 200. The self-propelled device 100 may refer to a smart device capable of achieving automatic positioning and movement. A self-propelled mower is used as an example for the description below. Referring to FIG. 2, the self-propelled mower includes a body 110, a traveling wheel assembly 120, a camera assembly 130, and a controller 140. The traveling wheel assembly 120 may be used for supporting the body 110. The camera assembly 130 is mounted on the body 110 and may be used for collecting the image around the self-propelled mower. The controller 140 is located inside the self-propelled mower and is communicatively connected (for example, electrically connected) to the camera assembly 130. For example, the camera assembly may be a camera. Referring to FIG. 3, the charging pile 200 may be understood as an external charging device with fixed dimensions and may be used for charging the self-propelled device 100 (for example, the self-propelled mower).

It is to be noted that the three-dimensional feature points on the charging pile are pre-stored in the controller of the self-propelled device, for example, in a register or a memory. The three-dimensional feature points are pre-calibrated based on preset feature information. The preset feature information may refer to feature information preset according to actual application requirements. Optionally, the preset feature information includes structural information and additional mark information. Optionally, the structural information includes at least one of the following: edge information, corner point information, and texture information. Optionally, the additional mark information includes preset pattern information, where the preset pattern information includes QR code information, barcode information, and the like. For example, the three-dimensional feature points may be represented by world coordinate information. Specifically, a world coordinate system may be established in advance, and the charging pile with three-dimensional feature points pre-calibrated based on the preset feature information may be projected into the world coordinate system, thereby obtaining the spatial coordinate information corresponding to each three-dimensional feature point; and then the spatial coordinate information is stored in the controller of the self-propelled device.

Referring to FIG. 4, the controller of the self-propelled device is configured to perform steps A1 and A2 below.

In A1, a target image corresponding to the charging pile collected by the camera assembly is acquired, and feature points are extracted from the target image based on the preset feature information so that two-dimensional feature points are obtained.

Specifically, when the self-propelled device moves near the charging pile, the camera assembly in the self-propelled device may be used to collect the image of the charging pile to obtain the target image corresponding to the charging pile. Then, feature point detection and extraction are performed on the target image according to the preset feature information so that the two-dimensional feature points in the target image are obtained. The two-dimensional feature points have the same number as the three-dimensional feature points pre-stored in the controller, and the two-dimensional feature points may be represented by two-dimensional coordinate information. Specifically, the target image may be used as a reference to establish a pixel coordinate system. For example, with the upper left corner of the target image as the center, the pixel coordinate system is established with the horizontal pixel direction (that is, the width direction) and the vertical pixel direction (that is, the height direction) of the target image as the horizontal axis and the vertical axis, respectively. In this manner, the two-dimensional coordinate information of each two-dimensional feature point in the pixel coordinate system can be obtained.

It is to be noted that the feature point detection method is not specifically limited in this example and may be flexibly selected according to actual application requirements. For example, for edge information detection, a first-order detection algorithm (such as the Roberts operator, the Prewitt operator, the Sobel operator, or the Canny operator) may be used, or a second-order detection algorithm (such as the Laplacian operator) may be used; for corner detection, the SIFT, Harris, SURF, features from accelerated segment test (FAST), or other algorithms may be used; for texture detection, a graylevel co-occurrence matrix (GLCM), local binary patterns (LBP), or other methods may be used.

In A2, the parameter of the camera assembly is calibrated based on the correspondence between the two-dimensional feature points and the three-dimensional feature points.

In this example, both the two-dimensional feature points and the three-dimensional feature points are obtained based on the preset feature information and differ only in the dimension, the difference in the dimension of the feature points is caused by the shooting of the camera assembly, and the parameter of the camera assembly plays a key role. Therefore, the parameter of the camera assembly may be calibrated based on the correspondence between the two-dimensional feature points and the three-dimensional feature points under the same preset feature information. The parameter may include an intrinsic parameter. Optionally, the intrinsic parameter includes the focal length and the optical center.

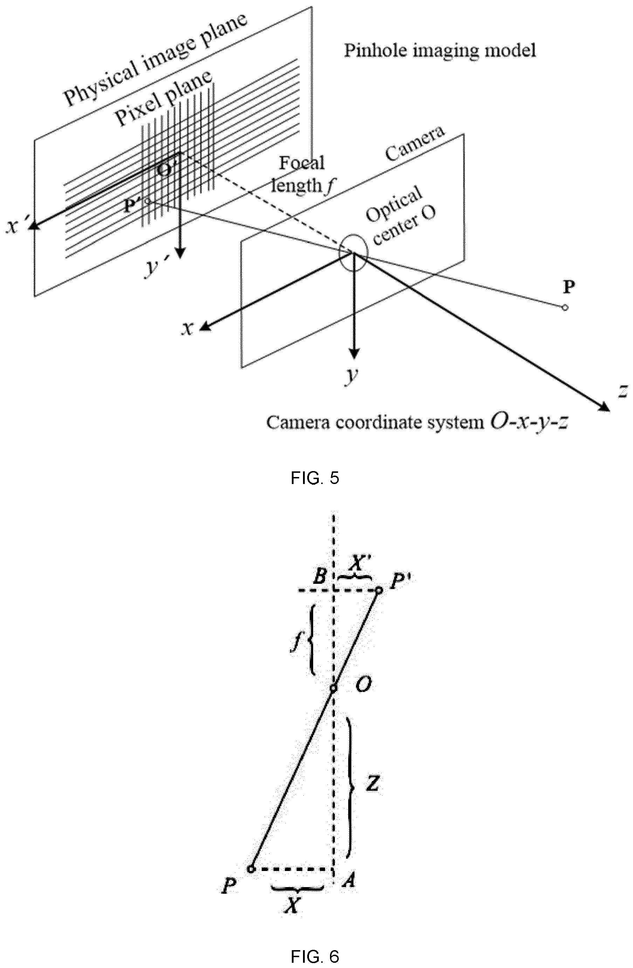

Referring to FIG. 5, if the camera (camera assembly) is regarded as a pinhole, the correspondence between the two-dimensional feature points and the three-dimensional feature points may be described by a pinhole imaging model. Specifically, the three-dimensional feature point $P$ in the world coordinate system may be transformed into the corresponding two-dimensional feature point $P'$ when projected onto the physical image plane through the optical center $O$ of the camera. O-x-y-z is the camera coordinate system, the z-axis points directly in front of the camera, the x-axis points to the right, the y-axis points downward, and the distance (that is, the $OO'$ length) between the physical image plane and the optical center is the focal length f of the camera.

Assuming that the coordinates of point $P$ in the world coordinate system are (X, Y, Z) and the coordinates of point $P'$ in the $O'-x'-y'$ coordinate system are ($X'$, $Y'$), then the pinhole imaging model in FIG. 5 may be simplified to the similar triangles in FIG. 6.

According to FIG. 6, the following relationship: $\frac{Z}{f} = \frac{X}{X'} = \frac{Y}{Y'}$ may be obtained, the coordinate relation-

$$\begin{cases} X' = f\frac{X}{Z} \\ Y' = f\frac{Y}{Z} \end{cases}$$

ship between $P$ and $P'$ is , and then the coordinates of point $P'$ in the $O'-x'-y'$ coordinate system is

$$\left(f\frac{X}{Z},\ f\frac{Y}{Z}\right).$$

Further, point $P'$ on the physical image plane needs to be transformed to a pixel plane, that is to say, point $P'$ is transformed from the $O'-x'-y'$ coordinate system to a pixel coordinate system ($o'$-u-v), where the origin o' is located at the upper left corner of the image, the u-axis points to the right and is parallel to the x-axis, and the v-axis points downward and is parallel to the y-axis. Assuming that the coordinates of corresponding point $P''$ of $P'$ in the $o'$-u-v coordinate system are (U, V), the coordinates of point $P''$ are scaled by $\alpha$ times on the u-axis and $\beta$ times on the v-axis, and the origin is translated by $[c_x, c_y]$, then the coordinate relationship between $P'$ and $P''$ is

$$\begin{cases} U = \alpha X' + c_x \\ V = \beta Y' + c_y \end{cases}$$

. The coordinate relationship between $P$ and $P'$ is substituted into the preceding formula,

$$\begin{cases} U = \alpha f \frac{X}{Z} + c_x = f_x \frac{X}{Z} + c_x \\ V = \beta f \frac{Y}{Z} + c_y = f_y \frac{Y}{Z} + c_y \end{cases}$$

is obtained, and the corresponding matrix form is

$$\begin{pmatrix} U \\ V \\ 1 \end{pmatrix} = \frac{1}{Z}\begin{pmatrix} f_x & 0 & c_x \\ 0 & f_y & c_y \\ 0 & 0 & 1 \end{pmatrix}\begin{pmatrix} X \\ Y \\ Z \end{pmatrix} = \frac{1}{Z}KP$$

. The units of $f_x$ and $f_y$ are pixels, and $K$ denotes the intrinsic parameter matrix of the camera. Therefore, the intrinsic parameter of the camera assembly may be calibrated based on the correspondence between the two-dimensional feature points and the three-dimensional feature points under the same preset feature information.

In some examples, optionally, the camera assembly includes a binocular camera, where the binocular camera includes a left camera and a right camera. Correspondingly, the target image includes a first image and a second image, where the first image is the image of the charging pile collected by the left camera, and the second image is the image of the charging pile collected by the right camera. In this case, extracting the feature points from the target image based on the preset feature information to obtain the two-dimensional feature points may specifically include steps B1 and B2 below.

In B1, feature points are extracted from the first image based on the preset feature information so that first image two-dimensional feature points corresponding to the first image are obtained.

The first image two-dimensional feature points may refer to the two-dimensional feature points corresponding to the first image obtained after the feature points are extracted from the first image based on the preset feature information. For the feature point extraction manner, reference may be made to the relevant description in step A1 above, and the details are not repeated here.

In B2, feature points are extracted from the second image based on the preset feature information so that second image two-dimensional feature points corresponding to the second image are obtained.

The second image two-dimensional feature points may refer to the two-dimensional feature points corresponding to the second image obtained after the feature points are extracted from the second image based on the preset feature information. For the feature point extraction manner, reference may be made to the relevant description in step A1 above, and the details are not repeated here.

It is to be noted that the binocular camera may adopt a grayscale mode or a color mode (such as an RGB mode). When the binocular camera operates in the grayscale mode, the target image (including the first image and the second image) collected by the binocular camera is the grayscale image; when the binocular camera operates in the RGB mode, the target image (including the first image and the second image) collected by the binocular camera is the RGB image. Further, to improve the feature point extraction effect of the target image, if the target image (including the first image and the second image) collected by the binocular camera is the RGB image, the RGB image needs to be converted into the grayscale image, and then the feature points are extracted from the grayscale image based on the preset feature information.

In some examples, optionally, step A2 may specifically include steps C1 and C2 below.

In C1, a first intrinsic parameter of the left camera is determined based on the correspondence between the first image two-dimensional feature points and the three-dimensional feature points.

The first intrinsic parameter may refer to the intrinsic parameter corresponding to the left camera. For the method for determining the first intrinsic parameter, reference may be made to the relevant description in step A2 above, and the details are not repeated here.

In C2, a second intrinsic parameter of the right camera is determined based on the correspondence between the second image two-dimensional feature points and the three-dimensional feature points.

The second intrinsic parameter may refer to the intrinsic parameter corresponding to the right camera. For the method for determining the second intrinsic parameter, reference may be made to the relevant description in step A2 above, and the details are not repeated here.

In some examples, optionally, step A2 may further specifically include steps D1 to D3 below.

In D1, based on the first intrinsic parameter and the correspondence between the first image two-dimensional feature points and the three-dimensional feature points, a first extrinsic parameter of the left camera is determined, where the first extrinsic parameter is used for representing relative posture information between the left camera and the charging pile.

For example, the first extrinsic parameter of the left camera may be determined based on the least squares method or the Perspective-n-Point (PnP) algorithm. The PnP algorithm is based on the rotation matrix and the translation vector to represent the extrinsic parameter. The PnP algorithm is used as an example. The first extrinsic parameter of the left camera may be determined by the formula below.

$$\omega p = K P^C = K(R_{CW} \times P^W + t_{CW}^C)$$

p denotes the coordinates of the point in the pixel coordinate system, $P^C$ denotes the coordinates of the point in the camera coordinate system, $P^W$ denotes the coordinates of the point in the world coordinate system, $\omega$ denotes the depth of the point, and $K$ denotes the intrinsic parameter matrix of the left camera. $R_{CW}$ and $t_{CW}^C$ are used for representing the posture transformation from the world coordinate system to the camera coordinate system (that is, the first extrinsic parameter), $R_{CW}$ denotes the rotation matrix from the world coordinate system to the camera coordinate system (converting the representation of the vector in the world coordinate system to the representation of the same vector in the camera coordinate system), and $t_{CW}^C$ denotes the corresponding translation vector (that is, the representation of the vector from the origin of the camera coordinate system to the origin of the world coordinate system in the camera coordinate system).

Specifically, the process of solving the first extrinsic parameter of the left camera may be described as the problem below. The coordinates of n three-dimensional feature points in the world coordinate system are known to be $P_1^W$, $P_2^W$, ..., and $P_n^W$, the two-dimensional feature points corresponding to these n three-dimensional feature points in the pixel coordinate system are $p_1, p_2, ..., $ and $p_n$, the intrinsic parameter matrix of the left camera is known to be K, and the postures $R_{CW}$ and $t_{CW}^C$ of the camera coordinate system relative to the world coordinate system are solved. For example, the problem may be solved based on methods such as direct linear transformation (DLT), Platform for Privacy Preferences Project (P3P), efficient Perspective-n-Point (EPnP), or bundle adjustment (BA). Specifically, reference may be made to the relevant implementation process in the existing art, and the details are not repeated here.

In D2, based on the second intrinsic parameter and the correspondence between the second image two-dimensional feature points and the three-dimensional feature points, a second extrinsic parameter of the right camera is determined, where the second extrinsic parameter is used for representing relative posture information between the right camera and the charging pile.

For the manner of determining the second extrinsic parameter, reference may be made to the relevant description in step D1 above, and the details are not repeated here.

In D3, a third extrinsic parameter of the binocular camera is determined according to the first extrinsic parameter and the second extrinsic parameter, where the third extrinsic parameter is used for representing relative posture information between the left camera and the right camera.

It is to be understood that since the first extrinsic parameter and the second extrinsic parameter represent the relative posture information between the left camera and the charging pile and the relative posture information between the right camera and the charging pile, respectively, in the case where the first extrinsic parameter and the second extrinsic parameter are known, the relative posture information between the left camera and the right camera (that is, the third extrinsic parameter of the binocular camera) can be quickly determined.

In some examples, optionally, the self-propelled device system further includes an infrared laser, and the camera assembly further includes a low-light camera.

For example, the low-light camera may be an RGB camera. Further, the low-light camera may be set as an ultra-sensitive video camera with the minimum illuminance of less than or equal to 0.01 Lux, which is conducive to improving the quality of images taken at night when the ambient brightness is relatively low. Specifically, the low-light camera may operate both during the day and at night. When operating during the day, the low-light camera may be used for artificial intelligence (AI) semantic perception and positioning. Since the color effect at night is not as good as that during the day, when operating at night, the low-light camera cannot be used for AI semantic perception and can only be used for positioning, which may specifically include charging pile visual positioning (for example, positioning the target or the position relative to the target), visual simultaneous localization and mapping (SLAM) (for example, positioning itself or the absolute position), and the like. Further, the infrared laser may be a near-infrared laser projector.

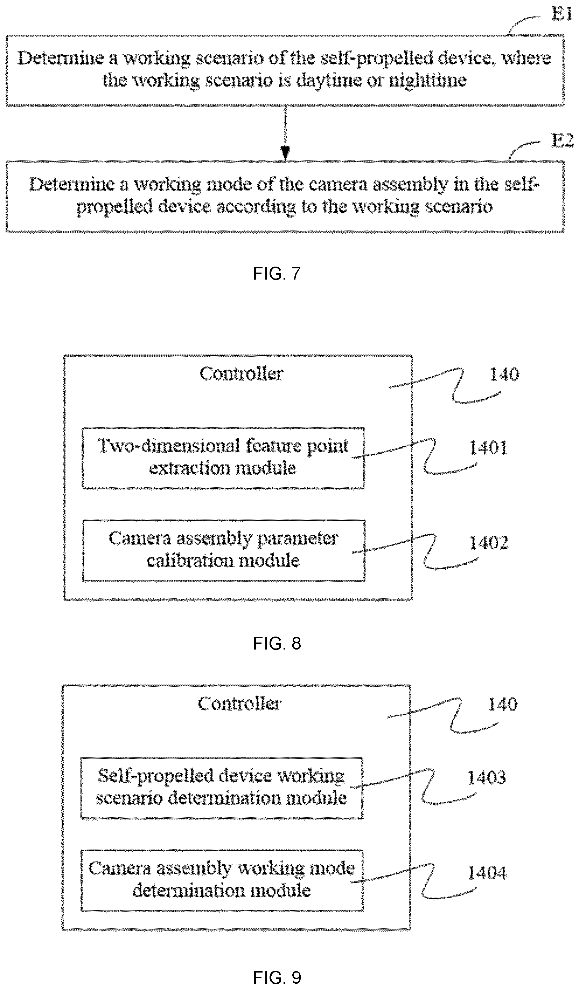

Referring to FIG. 7, the controller is further configured to perform steps E1 and E2 below.

In E1, a working scenario of the self-propelled device is determined, where the working scenario is daytime or nighttime.

In some examples, optionally, step E1 may specifically include the following step: determining the working scenario of the self-propelled device based on the working time of the self-propelled device or the ambient brightness of the self-propelled device.

Specifically, according to the actual application scenario, a first mapping relationship between the working time and the working scenario of the self-propelled device may be preset and a second mapping relationship between the ambient brightness and the working scenario of the self-propelled device may be set. For example, the first mapping relationship may be set as: [7:00-19:00] is daytime and [19:00-7:00] is nighttime. The second mapping relationship may be set to be that the working scenario is daytime when the ambient brightness is greater than a preset brightness threshold, and the working scenario is nighttime when the ambient brightness is less than or equal to the preset brightness threshold. The preset brightness threshold may refer to an ambient brightness reference value preset according to actual application requirements.

On the basis of presetting the first mapping relationship, the current working time of the self-propelled device may be determined, and then the first mapping relationship is searched according to the current working time so that the working scenario matching the current working time is determined as the current working scenario of the self-propelled device. On the basis of presetting the second mapping relationship, the current ambient brightness of the self-propelled device may be determined, and then the second mapping relationship is searched according to the current ambient brightness so that the working scenario matching the current ambient brightness is determined as the current working scenario of the self-propelled device. On the basis of presetting the first mapping relationship and the second mapping relationship, the current working scenario of the self-propelled device is determined in one of the methods.

In E2, a working mode of the camera assembly in the self-propelled device is determined according to the working scenario.

After the working scenario of the self-propelled device is determined, the working mode of the camera assembly in the self-propelled device may be determined according to the working scenario so that the special requirements of the self-propelled device for positioning (such as visual SLAM) and obstacle avoidance (visual obstacle detection) functions can be simultaneously satisfied in different working scenarios.

In some examples, optionally, step E2 may specifically include steps F1 and F2 below.

In F1, if the working scenario is daytime, it is determined that the working mode of the camera assembly is the low-light camera and a binocular camera in a first state or merely a binocular camera in a first state, where the first state is that the infrared laser is in an off state.

Specifically, if the working scenario is daytime, the passive binocular can be achieved by turning off the infrared laser. At this time, the binocular camera may be used for calculating the visual SLAM and the depth map of the charging pile. In this manner, the requirements of the self-propelled device for the positioning and obstacle avoidance functions during the day can be satisfied by merely using the binocular camera. The depth map is mainly used for visual obstacle detection and may also assist in visual SLAM. Further, on the basis of the passive binocular, the low-light camera may be used to combine positioning information of different dimensions, which is conducive to improving the positioning accuracy of the self-propelled device.

In F2, if the working scenario is nighttime, it is determined that the working mode of the camera assembly is the low-light camera and the binocular camera in a second state, where the second state is that the infrared laser is in an on state.

Specifically, if the working scenario is nighttime, the active binocular can be achieved by turning on the infrared laser. At this time, the image collected by the binocular camera is a speckle image, and the binocular camera cannot be used for calculating the visual SLAM of the charging pile and can only be used for calculating the depth map. Therefore, the requirements of the self-propelled device for the positioning function at night cannot be satisfied. If the requirements of the self-propelled device for the positioning and obstacle avoidance functions at night are to be satisfied simultaneously, based on the active binocular, the low-light camera needs to be used to provide visual SLAM information of the charging pile.

Referring to FIG. 8, the controller 140 in the self-propelled device may specifically include a two-dimensional feature point extraction module 1401 and a camera assembly parameter calibration module 1402. The two-dimensional feature point extraction module 1401 is used for acquiring a target image corresponding to the charging pile collected by the camera assembly and extracting feature points from the target image based on the preset feature information to obtain two-dimensional feature points. The camera assembly parameter calibration module 1402 is used for calibrating the parameter of the camera assembly based on the correspondence between the two-dimensional feature points and the three-dimensional feature points.

The three-dimensional feature points on the charging pile are pre-calibrated based on the preset feature information and pre-stored in the controller. Optionally, the preset feature information includes structural information and additional mark information. The structural information includes at least one of the following: edge information, corner point information, and texture information. The additional mark information includes preset pattern information, where the preset pattern information includes QR code information, barcode information, and the like.

In some examples, optionally, the two-dimensional feature point extraction module 1401 is used for extracting feature points from the first image based on the preset feature information to obtain first image two-dimensional feature points corresponding to the first image and extracting feature points from the second image based on the preset feature information to obtain second image two-dimensional feature points corresponding to the second image. The first image is the image of the charging pile collected by the left camera in the binocular camera (camera assembly), and the second image is the image of the charging pile collected by the right camera in the binocular camera (camera assembly).

In some examples, optionally, the camera assembly parameter calibration module 1402 is used for determining a first intrinsic parameter of the left camera based on the correspondence between the first image two-dimensional feature points and the three-dimensional feature points and determining a second intrinsic parameter of the right camera based on the correspondence between the second image two-dimensional feature points and the three-dimensional feature points. The intrinsic parameter includes the focal length and the optical center.

In some examples, optionally, the camera assembly parameter calibration module 1402 is further used for: based on the first intrinsic parameter and the correspondence between the first image two-dimensional feature points and the three-dimensional feature points, determining a first extrinsic parameter of the left camera, where the first extrinsic parameter is used for representing relative posture information between the left camera and the charging pile; based on the second intrinsic parameter and the correspondence between the second image two-dimensional feature points and the three-dimensional feature points, determining a second extrinsic parameter of the right camera, where the second extrinsic parameter is used for representing relative posture information between the right camera and the charging pile; and determining a third extrinsic parameter of the binocular camera according to the first extrinsic parameter and the second extrinsic parameter, where the third extrinsic parameter is used for representing relative posture information between the left camera and the right camera.

Referring to FIG. 9, the controller 140 in the self-propelled device may further include a self-propelled device working scenario determination module 1403 and a camera assembly working mode determination module 1404. The self-propelled device working scenario determination module 1403 is used for determining the working scenario of the self-propelled device based on the working time of the self-propelled device or the ambient brightness of the self-propelled device. The camera assembly working mode determination module 1404 is used for: if the working scenario is daytime, determining that the working mode of the camera assembly is the low-light camera and a binocular camera in a first state or merely a binocular camera in a first state, where the first state is that the infrared laser is in an off state; and if the working scenario is nighttime, determining that the working mode of the camera assembly is the low-light camera and the binocular camera in a second state, where the second state is that the infrared laser is in an on state.

Another application scenario of the present application is described below. A target object of a preset category moves along the boundary of the working region of the self-propelled mower, the camera assembly of the self-propelled mower collects the image of the target object (other objects may exist in the image) at a certain detection frequency, the controller 140 of the self-propelled mower performs target detection on the collected image and based on a target detection result, determines the object (that is, the target object) that the self-propelled mower needs to follow, and the boundary of the working region of the self-propelled mower can be effectively identified through a target following result of the self-propelled mower for the followed object.

The boundary of the working region, the detection frequency, and the preset category may be preset according to actual application requirements and are not specifically limited to the present application. For example, the preset category may be human or another object. Specifically, if the preset category is human, the person may directly move along the boundary of the working region of the self-propelled mower, and the self-propelled mower performs target detection and target following on the person so that the self-propelled mower can quickly and conveniently identify the boundary of the working region. If the preset category is another object, such as a self-propelled device that can be controlled externally or a static marker (such as a hat or an armband), the self-propelled device may be controlled by the person to move along the boundary of the working region of the self-propelled mower, or the person may wear the static marker and move along the boundary of the working region of the self-propelled mower, and the self-propelled mower performs target detection and target following on the self-propelled device or the static marker so that the self-propelled mower can quickly and conveniently identify the boundary of the working region. It is to be understood that setting the preset category to human is the simplest and most efficient case.

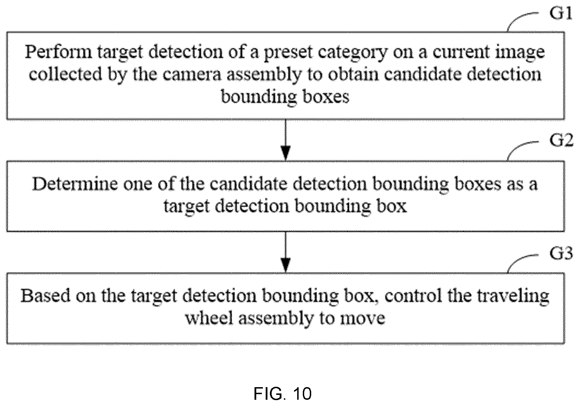

Referring to FIG. 10, the controller 140 of the self-propelled mower is configured to perform steps G1 to G3 below.

In G1, target detection of a preset category is performed on a current image collected by the camera assembly so that candidate detection bounding boxes are obtained.

The current image may refer to the image around the self-propelled mower collected by the camera assembly at the current moment, and the current image includes the target object of the preset category. Optional, the preset category is human. The candidate detection bounding box may be understood as a region of interest of the image including the target object obtained by performing target detection of the preset category on the current image and may be used for representing the position of the target object of the preset category in the current image. It is to be noted that one or more target objects of the preset category may exist in the current image, and the number of target objects is consistent with the number of candidate detection bounding boxes. That is to say, if only one target object of the preset category exists in the current image, then one corresponding candidate detection bounding box may be obtained after target detection of the preset category; if multiple target objects of the preset category exist in the current image, then multiple candidate detection bounding boxes may be obtained after target detection of the preset category. The size and shape of the candidate detection bounding box may be predetermined according to actual application requirements and are not specifically limited to this example. For example, the shape of the candidate detection bounding box may be set to a rectangle, a square, a circle, an ellipse, or the like.

In some examples, optionally, the camera assembly includes a binocular camera, where the binocular camera includes a left camera and a right camera. Correspondingly, the current image may be an RGB image or a grayscale image collected by the left camera or the right camera.

In addition to the binocular camera, the camera assembly may include another camera, for example, the low-light camera. Correspondingly, the current image may be an RGB image or a grayscale image collected by the low-light camera or may be an RGB image or a grayscale image collected by the left camera or the right camera of the binocular camera.

In some examples, optionally, performing target detection of the preset category on the current image collected by the camera assembly includes: based on a preset deep learning model, performing target detection of the preset category on the current image collected by the camera assembly, where the preset deep learning model is one of a CNN, an R-CNN, an SSD, and YOLO.

The preset deep learning model may refer to a pre-trained deep learning model that can be used for performing target detection of the preset category on the image. For example, the case where the preset category is the pedestrian is used as an example. Transfer learning technology may be used to use a pedestrian image dataset on a basic target detection model to obtain the preset deep learning model that satisfies the prediction accuracy and speed through model training; or an existing trained pedestrian target detection model may be directly acquired and used as the preset deep learning model. The input of the preset deep learning model is an image including the pedestrian, and the output is the detection bounding box corresponding to the pedestrian in the image. Therefore, when target detection is performed on the pedestrian in the image using the preset deep learning model, the current image collected by the camera assembly is inputted into the preset deep learning model, and the output of the model is the candidate detection bounding box corresponding to each pedestrian in the current image.

Specifically, the preset deep learning model may be one of a CNN, an R-CNN, an SSD, or YOLO. The CNN specifically includes a convolutional layer (mainly used for feature extraction), a pooling layer (mainly used for downsampling), and a fully connected layer (mainly used for classification). The R-CNN applies a regional recommendation strategy based on the CNN to form a bottom-up target positioning model. The SSD is a multi-scale target detection algorithm through which feature extraction is performed by the CNN and different feature layers are selected for target detection. YOLO is another target detection algorithm. The core idea is to transform a target detection task into a regression problem and simultaneously position and classify the targets through a single neural network, thereby achieving real-time and efficient target detection.

In G2, one of the candidate detection bounding boxes is determined as a target detection bounding box.

In this example, after the candidate detection bounding boxes corresponding to the preset category in the current image are obtained, one of the candidate detection bounding boxes needs to be determined as the target detection bounding box. Specifically, if only one candidate detection bounding box exists in the current image, the candidate detection bounding box may be directly determined as the target detection bounding box; if multiple candidate detection bounding boxes exist in the current image at the same time, one of the multiple candidate detection bounding boxes needs to be selected and determined as the target detection bounding box. The target object of the preset category corresponding to the target detection bounding box is the target object that the self-propelled mower needs to follow subsequently.

In some examples, optionally, the candidate detection bounding boxes are multiple bounding boxes. Correspondingly, determining one of the candidate detection bounding boxes as the target detection bounding box includes: acquiring a reference image, where the reference image includes a reference object of the preset category; performing the target detection of the preset category on the reference image to obtain a reference detection bounding box; determining the similarity between the reference detection bounding box and each of the candidate detection bounding boxes; and using a candidate detection bounding box with the maximum similarity as the target detection bounding box.

In this example, the user may be allowed to pre-specify a followed object that satisfies the preset category as the reference object through a user-friendly interactive interface, and an image of the reference object specified by the user may be taken as the reference image. When the controller 140 determines the target detection bounding box from the candidate detection bounding boxes, the controller 140 acquires the reference image and then performs target detection of the preset category on the reference image through the preset deep learning model to obtain one reference detection bounding box. Then, the similarity between the reference detection bounding box and each candidate detection bounding box is calculated, the similarities are sorted in order from large to small, and the candidate detection bounding box with the maximum similarity is selected as the target detection bounding box. It is to be understood that the larger the similarity between the reference detection bounding box and the candidate detection bounding box, the larger the similarity between the target object corresponding to the candidate detection bounding box and the reference object. Therefore, it can be considered that the target object corresponding to the candidate detection bounding box with the maximum similarity is the reference object. In this case, the candidate detection bounding box with the maximum similarity may be used as the target detection bounding box, thereby ensuring that the self-propelled mower can perform target following on the reference object specified by the user.

In some examples, optionally, the candidate detection bounding boxes are multiple bounding boxes. Correspondingly, determining one of the candidate detection bounding boxes as the target detection bounding box includes: determining a current depth map corresponding to the current image based on an image collected by the binocular camera; determining candidate depth information corresponding to each of the candidate detection bounding boxes according to the current depth map; performing information statistics on each piece of candidate depth information to obtain depth statistical information corresponding to each of the candidate detection bounding boxes; and using a candidate detection bounding box corresponding to the minimum value in the depth statistical information as the target detection bounding box.

In this example, based on the depth map of the current image, the target object of the preset category that is closest to the self-propelled mower may be selected as an actual followed object. Each pixel value in the depth map represents the distance between the pixel and the camera assembly (that is, depth information), where the depth information can provide distance information between the target object of the preset category and the camera assembly, which is conducive to better representing the position and posture of the target object of the preset category. It is to be noted that the smaller the pixel value in the depth map is, the smaller the distance between the pixel and the camera assembly is, that is, it may reflect that the distance between the target object of the preset category corresponding to the pixel and the camera assembly is smaller.

Specifically, first, a current depth map corresponding to the current image needs to be determined based on an image collected by the binocular camera. Optionally, determining the current depth map corresponding to the current image based on the image collected by the binocular camera includes: using an RGB image or a grayscale image collected by the left camera of the binocular camera as the first image, and using an RGB image or a grayscale image collected by the right camera of the binocular camera as the second image; determining a current parallax map between the first image and the second image; and determining the current depth map corresponding to the current image according to the current parallax map.

Specifically, the intrinsic parameter and extrinsic parameter of the binocular camera need to be pre-calibrated, where the intrinsic parameter may include the focal length, the optical center, and the like, and the extrinsic parameter is used for representing the position and direction of the binocular camera in space (that is, posture information). First, the RGB image or the grayscale image collected by the left camera of the binocular camera is determined as the first image, and the RGB image or the grayscale image collected by the right camera of the binocular camera is determined as the second image. The first image and the second image are RGB images or grayscale images collected at different viewing angles for the same detection region. Then, image preprocessing operations such as de-distortion and the grayscale conversion may be performed on the first image and the second image, respectively, and corresponding pixels of the preprocessed first image and the preprocessed second image may be matched. By matching the pixels at corresponding positions in the two images, the distance between the corresponding pixels can be obtained, thereby obtaining the current parallax map between the first image and the second image. Then, the depth information of each pixel position may be calculated based on the current parallax map in conjunction with the intrinsic parameter and extrinsic parameter of the binocular camera. Finally, the depth information of each pixel position is mapped to the current image so that the current depth map corresponding to the current image can be generated.

After the current depth map corresponding to the current image is determined, the candidate depth information corresponding to each candidate detection bounding box may be determined according to the current depth map. Optionally, determining the candidate depth information corresponding to each of the candidate detection bounding boxes according to the current depth map includes: performing pixel alignment between the current depth map and each of the candidate detection bounding boxes; and determining the candidate depth information corresponding to each of the candidate detection bounding boxes based on the current depth map after pixel alignment.

It is to be noted that, to match the current depth map with the candidate detection bounding box in the current image, it needs to be ensured that the current depth map and the current image have been spatially positioned and calibrated. Specifically, first, pixel alignment between the current depth map and each of the candidate detection bounding boxes needs to be performed. For example, the left camera of the binocular camera may be used as a reference, the intrinsic parameter and extrinsic parameter of the binocular camera are calibrated, and then each candidate detection bounding box is mapped to the current depth map through the spatial transformation based on the intrinsic parameter and extrinsic parameter of the binocular camera, thereby achieving pixel alignment. Then, the depth information corresponding to each candidate detection bounding box may be acquired from the current depth map after pixel alignment and used as the candidate depth information. It is to be understood that since the candidate detection bounding box includes multiple pixels, the candidate depth information corresponding to each candidate detection bounding box includes multiple pieces of depth information.

After the candidate depth information corresponding to each candidate detection bounding box is determined, information statistics may be performed on each candidate depth information so that the depth statistical information corresponding to each candidate detection bounding box is obtained. It is to be noted that the depth statistical information is a statistical value that can comprehensively and objectively reflect the depth information of each candidate detection bounding box. For example, the parameter corresponding to the depth statistical information may be an average value, a median, a representative depth value, or the like, may be flexibly set according to actual application requirements, and is not limited to this example.

In some examples, optionally, performing information statistics on each piece of candidate depth information to obtain the depth statistical information corresponding to each of the candidate detection bounding boxes includes: determining an average depth value of the candidate depth information corresponding to each candidate detection bounding box; and using the average depth value as the depth statistical information corresponding to the candidate detection bounding box.

Specifically, the average value of the candidate depth information corresponding to each candidate detection bounding box is calculated and used as the average depth value, and the average depth value is used as the depth statistical information corresponding to each candidate detection bounding box.

In some examples, optionally, performing information statistics on each piece of candidate depth information to obtain the depth statistical information corresponding to each of the candidate detection bounding boxes includes: determining a depth median of the candidate depth information corresponding to each candidate detection bounding box; and using the depth median as the depth statistical information corresponding to the candidate detection bounding box.

Specifically, the median of the candidate depth information corresponding to each candidate detection bounding box is calculated and used as the depth median, and the depth median is used as the depth statistical information corresponding to each candidate detection bounding box.

In some examples, optionally, performing information statistics on each piece of candidate depth information to obtain the depth statistical information corresponding to each of the candidate detection bounding boxes includes: acquiring depth information at the position of the central pixel of each candidate detection bounding box and using the depth information as the depth statistical information corresponding to each candidate detection bounding box.

Specifically, the position of the central pixel of each candidate detection bounding box is determined, and then the depth information at the position of the central pixel is acquired and used as the depth statistical information corresponding to each candidate detection bounding box.

After the depth statistical information corresponding to each candidate detection bounding box is obtained, pieces of the depth statistical information may be sorted in order from small to large, the depth statistical information with the minimum value is determined, and the candidate detection bounding box corresponding to the depth statistical information with the minimum value is used as the target detection bounding box. Therefore, the detection bounding box (that is, the target detection bounding box) closest to the camera assembly can be quickly and accurately positioned, and the target object of the preset category corresponding to the target detection bounding box is the actual followed object of the self-propelled mower.

In G3, based on the target detection bounding box, the traveling wheel assembly is controlled to move.

In this example, after the target detection bounding box is determined, based on the target detection bounding boxes at different detection moments, the traveling wheel assembly may be controlled to move so that the self-propelled mower can identify the boundary of the working region by performing target detection and target following on the target object of the preset category corresponding to the target detection bounding box.

In some examples, optionally, based on the target detection bounding box, controlling the traveling wheel assembly to move includes: determining target depth information corresponding to the target detection bounding box; converting the target detection bounding box into a three-dimensional space according to the target depth information to obtain target point cloud information corresponding to the target detection bounding box; and based on the target point cloud information, controlling the traveling wheel assembly to move.

Specifically, on the basis of determining the current depth map corresponding to the current image based on the image collected by the binocular camera, pixel alignment may be performed between the current depth map and the target detection bounding box, and the target depth information corresponding to the target detection bounding box is determined based on the current depth map after pixel alignment. The target depth information may be used for representing the depth information corresponding to each pixel in the target detection bounding box.

After the target depth information is determined, the target detection bounding box may be converted into the three-dimensional space according to the target depth information so that the target point cloud information corresponding to the target detection bounding box is obtained. The target point cloud information may be used for reflecting the point cloud representation of the target object of the preset category corresponding to the target detection bounding box in the three-dimensional space. It is to be understood that, since the target detection bounding box includes multiple pixels, the corresponding target point cloud information includes multiple point clouds. For example, the target point cloud information may be represented based on spatial coordinates in the world coordinate system (established in advance according to actual application requirements). In this case, one target object may correspond to multiple spatial coordinates.

In some examples, optionally, converting the target detection bounding box into the three-dimensional space according to the target depth information includes: acquiring an intrinsic parameter of the binocular camera; and converting the target detection bounding box into the three-dimensional space according to the target depth information and the intrinsic parameter.

Specifically, the intrinsic parameters of the binocular camera (that is, the camera intrinsic parameters), such as the focal length and the optical center, need to be acquired first. For example, the intrinsic parameter of the camera may be described in the form of an intrinsic parameter matrix, where the intrinsic parameter matrix

$$\begin{pmatrix} f_x & 0 & c_x \\ 0 & f_y & c_y \\ 0 & 0 & 1 \end{pmatrix}$$

may be expressed as . After the intrinsic parameter matrix of the binocular camera is obtained, the target detection bounding box may be converted into the three-dimensional space through the formula

$$\omega p = K(R_{CW} \times P^W + t_{CW}^C)$$

. p denotes the coordinates of the point in the pixel coordinate system, $P^W$ denotes the coordinates of the point in the world coordinate system, $\omega$ denotes the depth of the point (determined by the target depth information), K denotes the intrinsic parameter matrix, $R_{CW}$ denotes the rotation matrix from the world coordinate system to the camera coordinate system (converting the representation of the vector in the world coordinate system to the representation of the same vector in the camera coordinate system), and $t_{CW}^C$ denotes the corresponding translation vector (that is, the representation of the vector from the origin of the camera coordinate system to the origin of the world coordinate system in the camera coordinate system). The pixel coordinate system (o'-u-v) may be established with the upper left corner of the image as the origin o', the horizontal pixel direction as the u-axis, and the vertical pixel direction as the v-axis. The camera coordinate system (O'-x-y-z) may be established with the optical center of the camera as the origin O and the front of the camera as the z-axis. Based on the preceding formula, by solving $P^W$, the target point cloud information corresponding to the target detection bounding box can be obtained.

After the target point cloud information is determined, based on the target point cloud information, the traveling wheel assembly may be controlled to move. Optionally, based on the target point cloud information, controlling the traveling wheel assembly to move includes: determining target centroid coordinates corresponding to the target point cloud information; and according to the target centroid coordinates, controlling the traveling wheel assembly to move.

For example, it is assumed that the target point cloud information is represented by the spatial coordinates in the world coordinate system. For example, the target point cloud information includes the spatial coordinates corresponding to four point clouds, which are represented as (x1, y1, z1), (x2, y2, z2), (x3, y3, z3), and (x4, y4, z4) in the world coordinate system (O-X-Y-Z), respectively. In this case, the average values of the spatial coordinates corresponding to the four point clouds on the coordinate axes are calculated separately, and the target centroid coordinates are determined based on the average values of the spatial coordinates on the coordinate axes. Specifically, the average coordinate on the X-axis may be expressed as (x1 + x2 + x3 + x4)/4, the average coordinate on the Y-axis may be expressed as (y1 + y2 + y3 + y4)/4, and the average coordinate on the Z-axis may be expressed as (z1 + z2 + z3 + z4)/4, so the target centroid coordinates are ((x1 + x2 + x3 + x4)/4, (y1 + y2 + y3 + y4)/4, (z1 + z2 + z3 + z4)/4). According to the preceding process, the target centroid coordinates corresponding to each detection moment are calculated, and then the controller 140 adjusts the movement of the self-propelled mower according to the target centroid coordinates so that the self-propelled mower can quickly and accurately locate the boundary of the working region by following the target centroid coordinates.

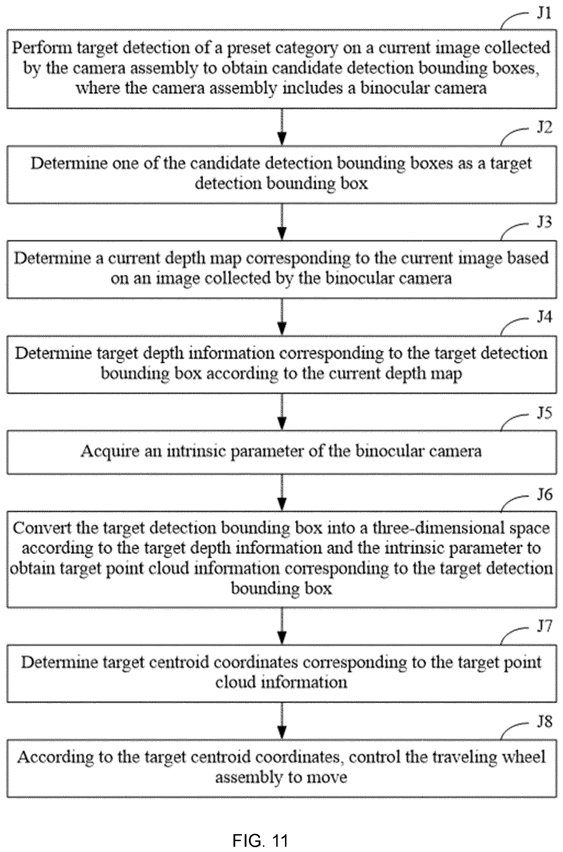

In some examples referring to FIG. 11, the controller 140 of the self-propelled mower is configured to perform steps J1 to J8 below.

In J1, target detection of a preset category is performed on a current image collected by the camera assembly so that candidate detection bounding boxes are obtained, where the camera assembly includes a binocular camera.

In J2, one of the candidate detection bounding boxes is determined as a target detection bounding box.

In J3, a current depth map corresponding to the current image is determined based on an image collected by the binocular camera.

In J4, target depth information corresponding to the target detection bounding box is determined according to the current depth map.

In J5, an intrinsic parameter of the binocular camera is acquired.

In J6, the target detection bounding box is converted into a three-dimensional space according to the target depth information and the intrinsic parameter so that target point cloud information corresponding to the target detection bounding box is obtained.

In J7, target centroid coordinates corresponding to the target point cloud information are determined.

In J8, according to the target centroid coordinates, the traveling wheel assembly is controlled to move.

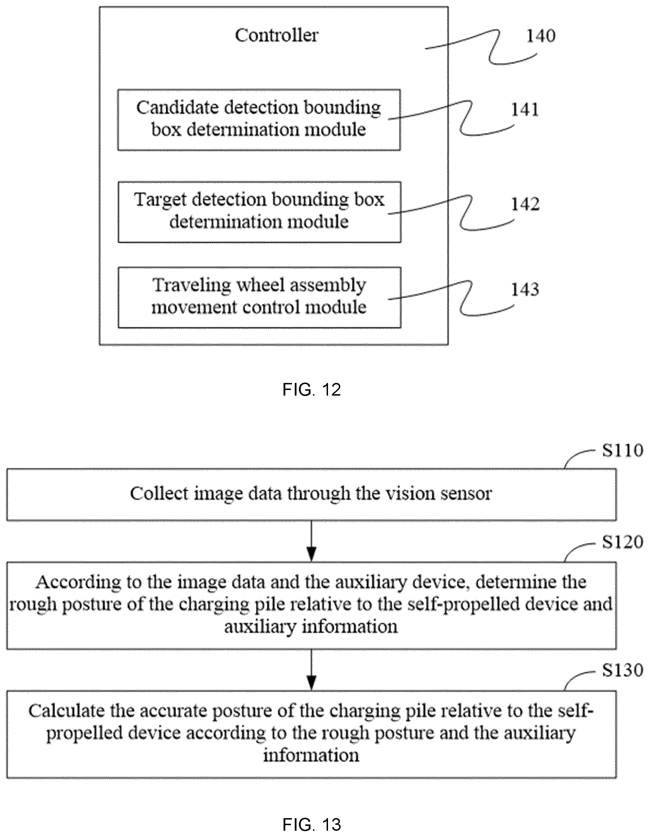

Referring to FIG. 12, the controller 140 of the self-propelled mower may specifically include a candidate detection bounding box determination module 141, a target detection bounding box determination module 142, and a traveling wheel assembly movement control module 143. The candidate detection bounding box determination module 141 is used for performing target detection of a preset category on a current image collected by the camera assembly to obtain candidate detection bounding boxes.

The target detection bounding box determination module 142 is used for determining one of the candidate detection bounding boxes as a target detection bounding box. The traveling wheel assembly movement control module 143 is used for, based on the target detection bounding box, controlling the traveling wheel assembly to move.

In some examples, optionally, the target detection bounding box determination module 142 includes a current depth map determination unit for determining a current depth map corresponding to the current image based on an image collected by the binocular camera; a candidate depth information determination unit for determining candidate depth information corresponding to each of the candidate detection bounding boxes according to the current depth map; a depth statistical information determination unit for performing information statistics on each piece of candidate depth information to obtain depth statistical information corresponding to each of the candidate detection bounding boxes; and a target detection bounding box determination unit for using a candidate detection bounding box corresponding to the minimum value in the depth statistical information as the target detection bounding box.

In some examples, optionally, the current depth map determination unit is specifically used for: using an RGB image or a grayscale image collected by the left camera of the binocular camera as the first image, and using an RGB image or a grayscale image collected by the right camera of the binocular camera as the second image; determining a current parallax map between the first image and the second image; and determining the current depth map corresponding to the current image according to the current parallax map.

In some examples, optionally, the candidate depth information determination unit is specifically used for: performing pixel alignment between the current depth map and each of the candidate detection bounding boxes; and determining the candidate depth information corresponding to each of the candidate detection bounding boxes based on the current depth map after pixel alignment.

In some examples, optionally, the depth statistical information determination unit is used for: determining an average depth value of the candidate depth information corresponding to each candidate detection bounding box; and using the average depth value as the depth statistical information corresponding to the candidate detection bounding box.

In some examples, optionally, the depth statistical information determination unit is further used for: determining a depth median of the candidate depth information corresponding to each candidate detection bounding box; and using the depth median as the depth statistical information corresponding to the candidate detection bounding box.

In some examples, optionally, the depth statistical information determination unit is further used for: acquiring depth information at the position of the central pixel of each candidate detection bounding box and using the depth information as the depth statistical information corresponding to each candidate detection bounding box.

In some examples, optionally, the target detection bounding box determination module 142 is further used for: acquiring a reference image, where the reference image includes a reference object of the preset category; performing the target detection of the preset category on the reference image to obtain a reference detection bounding box; determining the similarity between the reference detection bounding box and each of the candidate detection bounding boxes; and using a candidate detection bounding box with the maximum similarity as the target detection bounding box.

In some examples, optionally, the traveling wheel assembly movement control module 143 includes a target depth information determination unit for determining target depth information corresponding to the target detection bounding box; a target point cloud information determination unit for converting the target detection bounding box into a three-dimensional space according to the target depth information to obtain target point cloud information corresponding to the target detection bounding box; and a traveling wheel assembly movement control unit for, based on the target point cloud information, controlling the traveling wheel assembly to move.

In some examples, optionally, the target point cloud information determination unit is specifically used for: acquiring an intrinsic parameter of the binocular camera; and converting the target detection bounding box into the three-dimensional space according to the target depth information and the intrinsic parameter.

In some examples, optionally, the traveling wheel assembly movement control unit is specifically used for: determining target centroid coordinates corresponding to the target point cloud information; and according to the target centroid coordinates, controlling the traveling wheel assembly to move.

In some examples, optionally, the candidate detection bounding box determination module is specifically used for: based on a preset deep learning model, performing target detection of the preset category on the current image collected by the camera assembly, where the preset deep learning model is one of a CNN, an R-CNN, an SSD, and YOLO.

FIG. 13 is a schematic diagram of a method for determining the posture of a charging pile of a self-propelled device system according to an example of the present application. This example is applicable to the case where the charging pile posture determination manner is optimized. The method may be performed by an apparatus for determining the posture of a charging pile of a self-propelled device system. The apparatus may be implemented by software and/or hardware and integrated into an electronic device. The electronic device involved in this example may be a server or another device with computing capabilities. In an example, the apparatus for determining the posture of a charging pile of a self-propelled device system is the controller 140 of the self-propelled device.

The self-propelled device system includes the self-propelled device, and the self-propelled device includes a vision sensor and an auxiliary device. The vision sensor is the preceding camera assembly 130, the auxiliary device includes a laser sensor or the auxiliary device includes an external positioning unit and a memory, and the memory stores the preset position and three-dimensional model of the charging pile.

The self-propelled device is a device that can move autonomously to perform corresponding tasks. For example, the self-propelled device may be an uncrewed vehicle or an autonomous mower. The vision sensor is an instrument that uses optical elements and imaging devices to acquire image information of the external environment. For example, the vision sensor may be a camera or a video camera mounted on the self-propelled device. The auxiliary device refers to a device for auxiliary positioning of the position information of the self-propelled device. The auxiliary device may include the laser sensor or include the external positioning unit and the memory. The laser sensor may acquire laser point cloud data by emitting laser light to obtain auxiliary information related to the position information of the self-propelled device. The external positioning unit refers to a device that acquires the position information of the self-propelled device through an external positioning device.

The auxiliary information related to the position information of the self-propelled device is obtained through the external positioning unit and the preset position and three-dimensional model of the charging pile stored in the memory.

Specifically, the self-propelled device system 10 includes at least the self-propelled device 100 and the charging pile 200. The self-propelled device is a smart mower. FIG. 2 is a structural view of the smart mower. In FIG. 2, the reference number 150 denotes the laser sensor, which may specifically be the lidar; the reference number 130 denotes the camera assembly, such as a camera module, which may include the binocular camera; the reference number 170 denotes a communication module, such as a radio station, where through the communication module, the mower communicates with other devices in the system, such as a real-time kinematic (RTK) base station; the reference number 160 denotes the external positioning unit, such as a satellite positioning device; the reference number 120 denotes the traveling wheel assembly; and the reference number 180 denotes a working assembly for implementing the main working functions of the smart mower, such as mowing. FIG. 3 is a structural view of the charging pile 200.

Specifically, referring to FIG. 13, the method for determining the posture specifically includes the steps below.

In S110, an image is collected through the camera assembly 130.

After the self-propelled device is started, the camera assembly 130 on the self-propelled device is turned on, and image information around the self-propelled device 100 is acquired through the camera assembly 130. For example, after the self-propelled mower is started, the camera on the mower is turned on at the same time. When the self-propelled mower is moving, the camera captures images or videos around the mower as images.

In S120, according to the image and the auxiliary device, the rough posture of the charging pile relative to the self-propelled device and auxiliary information are determined.

The charging pile refers to a charging device associated with the self-propelled device. The charging pile may be preset at a certain position. When the power of the self-propelled device is less than a preset power threshold, the self-propelled device may move to the position of the charging pile for charging. Therefore, to ensure that the self-propelled device accurately reaches the position of the charging pile, the posture information of the charging pile relative to the self-propelled device needs to be determined so that the self-propelled device can move to the position of the charging pile according to the posture information. The posture includes position information and direction information.

Specifically, positioning is performed through the visual dimension, and the rough posture of the charging pile relative to the self-propelled device is determined according to the image, that is, the charging pile is roughly positioned through visual information; auxiliary positioning is performed through other dimensions, auxiliary information of the charging pile relative to the self-propelled device is determined according to other information acquired by the auxiliary device, and the auxiliary information describes the posture information of the charging pile relative to the self-propelled device from dimensions other than vision.

For example, if the auxiliary device is the laser sensor, laser light is emitted through the laser sensor, and the yaw angle between the laser light and the charging pile is calculated and used as the auxiliary information; if the auxiliary device is the external positioning unit and the memory, according to the image and the three-dimensional model of the charging pile, the feature points are calculated and used as the auxiliary information.

In S130, the accurate posture of the charging pile relative to the self-propelled device is calculated according to the rough posture and the auxiliary information.

The rough posture is mainly used to determine the posture of the charging pile relative to the self-propelled device from a visual perspective, the auxiliary information is used to determine the posture of the charging pile relative to the self-propelled device by adding a non-visual perspective, and direct positioning based solely on the visual perspective leads to certain errors in the positioning result. Therefore, the accurate posture of the charging pile relative to the self-propelled device is calculated in conjunction with the rough posture and the auxiliary information, which is equivalent to combining two dimensions of information to accurately position the charging pile, thereby improving the accuracy of determining the posture of the charging pile.

The benefit of the present application lies in the following: the rough posture of the charging pile relative to the self-propelled device and the auxiliary information are obtained through the camera assembly and the auxiliary device, and then the accurate posture of the charging pile relative to the self-propelled device is obtained according to the rough posture and the auxiliary information; the rough posture obtained according to the camera assembly is further accurately optimized through the auxiliary information obtained by the auxiliary device, thereby improving the accuracy of determining the posture of the charging pile and ensuring the charging effectiveness of the self-propelled device.

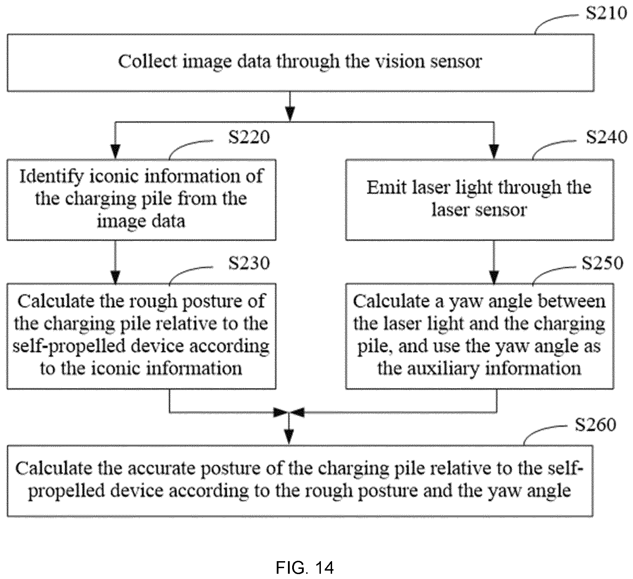

FIG. 14 is a schematic diagram of a method for determining the posture of a charging pile of a self-propelled device system according to an example of the present application. This example is a further refinement of the preceding technical solutions. The auxiliary device includes the laser sensor. The technical solution in this example may be combined with various optional solutions in one or more of the preceding examples. As shown in FIG. 14, the posture determination includes the steps below.

In S210, an image is collected through the camera assembly.

In S220, iconic information of the charging pile is identified from the image.

The iconic information refers to marker information pre-deployed on the charging pile. For example, the iconic information may be a barcode or some preset special marks. In a feasible example, the iconic information is an identification code. The identification code refers to an identification code including position information. For example, the coordinate information of four corner points of the identification code may be obtained by scanning and identifying the identification code. In a feasible example, the iconic information is a QR code.

That is, the world coordinate system coordinate information of the positions of the four corner points of the QR code may be obtained by scanning the QR code. The iconic information may be deployed in the front panel of the charging pile represented by the dotted box shown in FIG. 3.

Specifically, images are acquired by the camera assembly of the self-propelled device, feature matching is performed on the images according to feature information of the iconic information using computer vision technology and image processing algorithms to determine the image including the iconic information, and identification code coordinate information included in the iconic information is acquired by identifying the iconic information in the image.

In S230, the rough posture of the charging pile relative to the self-propelled device is calculated according to the iconic information.

Using the preset visual technology algorithm or deep learning model, the rough posture of the charging pile relative to the robot is calculated according to the identified marker information, where the rough posture provides the approximate position and direction of the charging pile in the robot coordinate system.

For example, the iconic information includes coordinate information of the four corner points of the identification code in the world coordinate system. The coordinate information of the identification code is converted through PnP so that the coordinate information of the four corner points of the identification code in the robot coordinate system is obtained. In conjunction with the pre-deployed position information of the identification code on the charging pile, the approximate position and direction of the charging pile in the robot coordinate system are obtained and used as the rough posture.

In S240, laser light is emitted through the laser sensor.

After the self-propelled device is started, the laser sensor deployed on the self-propelled device is turned on, and the laser sensor emits laser light to collect the laser point cloud data in the surrounding environment of the self-propelled device.

In S250, a yaw angle between the laser light and the charging pile is calculated, and the yaw angle is used as the auxiliary information.

Since the laser light of the laser sensor is emitted in a straight line and the laser sensor is located in the front of the self-propelled device, the included angle between the laser light emitted by the laser sensor and the charging pile is the yaw angle, that is, the yaw angle between the self-propelled device and the charging pile. The yaw angle represents the direction information between the self-propelled device and the charging pile, so the yaw angle is used as the auxiliary information.

For example, at the moment of collecting the image in which the iconic information of the charging pile is identified, the yaw angle between the laser light and the charging pile is calculated.

In a feasible example, calculating the yaw angle between the laser light and the charging pile includes the steps below.

According to the iconic information, target laser point cloud data corresponding to the charging pile is screened out.

The yaw angle is calculated using the target laser point cloud data.

When the yaw angle between the laser light and the charging pile is calculated, the iconic information is used as a reference, the related laser point cloud data near the iconic information is screened out from a large amount of laser point cloud data and used as the target laser point cloud data corresponding to the charging pile, and the yaw angle is calculated according to the target laser point cloud data. The yaw angle provides the direction information of the charging pile in the robot coordinate system.

For example, the iconic information includes coordinate information of the four corner points of the identification code in the world coordinate system. The coordinate information of the identification code is converted through PnP so that the coordinate information of the four corner points of the identification code in the laser coordinate system is obtained. According to the coordinate information of the four corner points of the identification code in the laser coordinate system, identification code laser point cloud data corresponding to the identification code is determined from all the laser point cloud data. In conjunction with the pre-deployed position information of the identification code on the charging pile, according to the identification code laser point cloud data, the surrounding laser point cloud data within a certain range is determined as the target laser point cloud data corresponding to the charging pile. For example, the laser point cloud data within a preset distance range extended on two sides of the identification code laser point cloud data in the horizontal direction is determined as the target laser point cloud data corresponding to the charging pile. The preset distance needs to be determined according to the pre-deployed position information of the identification code on the charging pile. After the target laser point cloud data is obtained, if the laser sensor is a line laser sensor, the straight line fitting is performed on the target laser point cloud data, and the normal direction of the fitted straight line is the yaw angle; if the laser sensor is a surface laser sensor, the surface fitting is performed on the target laser point cloud data, and the normal vector direction of the fitted surface is the yaw angle.

In S260, the accurate posture of the charging pile relative to the self-propelled device is calculated according to the rough posture and the yaw angle.

The rough posture is acquired through visual positioning, and the yaw angle in the direction information obtained through vision is inaccurate due to defects in the camera assembly. Therefore, the yaw angle is determined through the laser point cloud data and used to replace the yaw angle in the rough posture so that the accurate posture is obtained.

For example, the rough posture and the yaw angle are used as the initial posture for posture optimization, and the initial posture is iteratively optimized using an optimization algorithm (such as the least squares method or gradient descent) so that a more accurate posture of the charging pile relative to the mower is obtained. The object of posture optimization is to minimize the difference between the accurate posture, the rough posture, and the yaw angle. The accurate posture of the charging pile relative to the mower is calculated and updated to the control system or navigation system of the mower, thereby guiding the actions of the mower.

The benefit of the present application lies in the following: the rough posture of the charging pile relative to the self-propelled device and the yaw angle are obtained through the camera assembly and the laser sensor, and then the accurate posture of the charging pile relative to the self-propelled device is obtained according to the rough posture and the yaw angle; the rough posture obtained according to the camera assembly is further accurately optimized through the yaw angle obtained by the laser sensor, thereby improving the accuracy of determining the posture of the charging pile and ensuring the charging effectiveness of the self-propelled device.

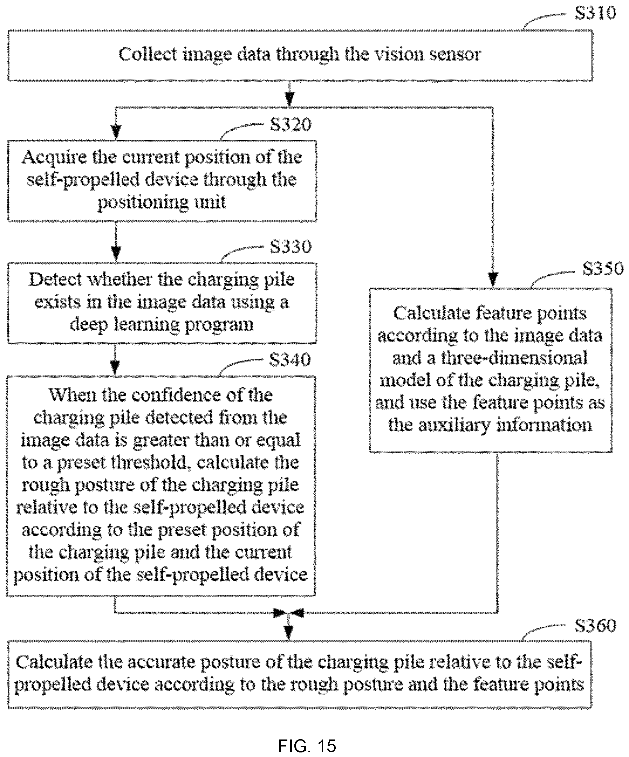

FIG. 15 is a schematic diagram of a method for determining the posture of a charging pile of a self-propelled device system according to an example of the present application. This example is a further refinement of the preceding technical solutions. The auxiliary device includes the external positioning unit and the memory. The technical solution in this example may be combined with various optional solutions in one or more of the preceding examples. As shown in FIG. 15, the posture determination includes the steps below.

In S310, an image is collected through the camera assembly.

In S320, the current position of the self-propelled device is acquired through the external positioning unit.

The external positioning unit refers to a device that acquires the position information of the self-propelled device through an external positioning device. Specifically, the current position of the self-propelled device is acquired through positioning using the external positioning unit on the self-propelled device. The external positioning unit may be a positioning device integrated with a positioning system.

In a feasible example, the external positioning unit includes a satellite positioning device.

Acquiring the current position of the self-propelled device through the external positioning unit includes the step below.

The current position is determined by receiving satellite signals through the satellite positioning device.

The satellite positioning device refers to a device for positioning through a satellite positioning system.

If the satellite positioning device is mounted in the self-propelled device, the real-time position information of the current self-propelled device can be determined by receiving satellite signals through the satellite positioning device. Specifically, the satellite positioning device may be a differential positioning device (RTK). Specifically, the current position is the position information of the self-propelled device in the world coordinate system, and the current position is the rough position of the self-propelled device.

In S330, whether the charging pile exists in the image is detected using a deep learning program.

During the recharging process of the self-propelled device, the camera assembly continuously acquires images, and the images are processed in real time using two-dimensional (2D) target detection technology, thereby detecting whether the charging pile exists in the image. For example, feature matching is performed on features of the charging pile using 2D target detection technology, and whether the charging pile exists in the image is determined according to a matching result.

Specifically, deep learning training is performed in advance according to a training image set of the charging pile to obtain a deep learning charging pile detection model, and the deep learning charging pile detection model is used to detect the images collected in real time to determine the detection information of the charging pile in the images. For example, the detection information of the charging pile includes the detection confidence of the charging pile in the images.

In S340, when the confidence of the charging pile detected from the image is greater than or equal to a preset threshold, the rough posture of the charging pile relative to the self-propelled device is calculated according to the preset position of the charging pile and the current position of the self-propelled device.

The confidence of the charging pile may represent the accuracy of the charging pile in the image. If it is determined that the confidence of the charging pile is greater than or equal to the preset threshold, the image of this frame is determined as the target image of the first frame, the current position of the self-propelled device acquired by the external positioning unit is determined according to the time when the target image of the first frame is collected, the position information of the preset charging pile in the world coordinate system may be determined according to the preset position of the charging pile stored in the memory, and in conjunction with the current position of the self-propelled device, that is, the position information of the self-propelled device in the world coordinate system, the rough posture of the charging pile relative to the self-propelled device can be obtained, that is, the rough position information and the rough direction information of the charging pile relative to the self-propelled device can be obtained.

In S350, feature points are calculated according to the image and a three-dimensional model of the charging pile, and the feature points are used as the auxiliary information.

The three-dimensional model of the charging pile is pre-stored in the memory, and the feature points of the charging pile in the image are determined through a feature matching result between the three-dimensional model and the target image of the first frame.

In a feasible example, calculating the feature points according to the image and the three-dimensional model of the charging pile includes the steps below.

A rendered image of the charging pile is obtained according to the three-dimensional model of the charging pile and the image.

Feature matching is performed on the image and the rendered image of the charging pile, and the feature points are calculated.

The three-dimensional model of the charging pile includes reference charging pile images from multiple perspectives. The reference charging pile images from multiple perspectives are matched with the target image of the first frame, and a reference charging pile image that is closest to a charging pile collection perspective in the target image of the first frame is determined as the rendered image of the charging pile.

The target image of the first frame and the rendered image of the charging pile are used to perform charging pile feature matching to obtain the feature points of the charging pile. The feature point of the charging pile is the corner point on the charging pile where the gradient change is greater than a preset gradient threshold.

In a feasible example, performing feature matching on the image and the rendered image of the charging pile includes the step below.

Feature matching is performed on the image and the rendered image of the charging pile using the SIFT or SURF.

The feature extraction algorithm used when feature matching is performed on the target image of the first frame and the rendered image of the charging pile may be the SIFT or SURF. The SIFT is a machine vision algorithm for detecting and describing local features in images. In the SIFT, extreme points are searched in the spatial scale and the positions, scales, and rotation invariants of the extreme points are extracted. SURF feature extraction technology is a feature extraction method based on the 2D gradient. Based on the Haar wavelet transform, the translation-invariant Haar wavelet is used to extract local feature points of the image. In the image processing process, SURF mainly adopts two methods: the degree of arrival (DOA) and contrast measurement (CMT). The DOA uses the gradient direction to describe the local features of the image, while CMT uses the degree of grayscale change of the image to describe the local features of the image.

The SURF detector divides the image into multiple parts through the gradient direction DOA and CMT and performs specific processing on each part to detect the key points in the image. The key points are usually distributed at the edges and corners of the image. The coordinates of the key points are used for distinguishing between similar points in the image and extracting the local features of the image.

In S360, the accurate posture of the charging pile relative to the self-propelled device is calculated according to the rough posture and the feature points.

Based on the perspective information of the rendered image of the charging pile, the direction information of the charging pile relative to the self-propelled device is determined according to the position information of the feature points in the image, and the accurate posture of the charging pile relative to the self-propelled device is obtained in conjunction with the position information in the rough posture.

In a feasible example, calculating the accurate posture of the charging pile relative to the self-propelled device according to the rough posture and the auxiliary information includes the step below.

Scale information of the charging pile is fixed using the rough posture, and in conjunction with the feature points, the accurate posture of the charging pile relative to the self-propelled device in the image is calculated.

Since the scale information of the charging pile is not fixed when the direction information is determined through the feature points, to ensure the accuracy of direction information determination, the scale information of the charging pile is fixed using the position information in the rough posture, that is, the scale information of the charging pile in the rendered image of the charging pile and the target image of the first frame is fixed through the position information in the rough posture; the direction information of the charging pile relative to the self-propelled device is determined according to the feature points obtained by feature matching; and then the direction information is used to replace the rough direction information in the rough posture so that the accurate posture of the charging pile relative to the self-propelled device is obtained.

For example, the scale information of the charging pile in the rendered image of the charging pile and the target image of the first frame is fixed through the position information in the rough posture; and then after the direction information of the charging pile relative to the self-propelled device is determined according to the feature points obtained by feature matching, the difference between the direction information and the rough direction information in the rough posture is determined. If the difference is greater than a preset threshold, the target image of the next frame with the confidence of the charging pile greater than or equal to a preset threshold is determined, and the accurate posture is determined according to the target image of the next frame.

The benefit of the present application lies in the following: the rough posture of the charging pile relative to the self-propelled device and the feature points are obtained through the camera assembly, the external positioning unit, and the memory, and then the accurate posture of the charging pile relative to the self-propelled device is obtained according to the rough posture and the feature points; the rough posture obtained according to the camera assembly is further accurately optimized through the feature points obtained by the external positioning unit and the memory, thereby improving the accuracy of determining the posture of the charging pile and ensuring the charging effectiveness of the self-propelled device.

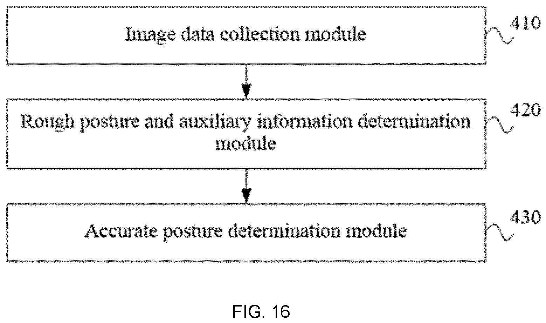

FIG. 16 is a schematic diagram illustrating the modules of an apparatus for determining the posture of a charging pile of a self-propelled device system according to an example of the present application. The self-propelled device system includes a self-propelled device, the self-propelled device includes a camera assembly and an auxiliary device, the auxiliary device includes a laser sensor or the auxiliary device includes an external positioning unit and a memory, and the memory stores a preset position and a three-dimensional model of the charging pile. As shown in FIG. 16, the apparatus includes an image collection module 410, a rough posture and auxiliary information determination module 420, and an accurate posture determination module 430.

The image collection module 410 is used for collecting an image through the camera assembly.

The rough posture and auxiliary information determination module 420 is used for determining the rough posture of the charging pile relative to the self-propelled device and auxiliary information according to the image and the auxiliary device.

The accurate posture determination module 430 is used for calculating the accurate posture of the charging pile relative to the self-propelled device according to the rough posture and the auxiliary information.

In some examples, the auxiliary device includes the laser sensor.

The rough posture and auxiliary information determination module includes an iconic information identification unit, a first rough posture calculation unit, a laser emission unit, and a first auxiliary information determination unit.

The iconic information identification unit is used for identifying iconic information of the charging pile from the image.

The first rough posture calculation unit is used for calculating the rough posture of the charging pile relative to the self-propelled device according to the iconic information.

The laser emission unit is used for emitting laser light through the laser sensor.

The first auxiliary information determination unit is used for calculating a yaw angle between the laser light and the charging pile and using the yaw angle as the auxiliary information.

In some examples, the auxiliary device includes the external positioning unit and the memory.

The rough posture and auxiliary information determination module includes a self-propelled device position determination unit, a charging pile detection unit, a second rough posture calculation unit, and a second auxiliary information determination unit.

The self-propelled device position determination unit is used for acquiring the current position of the self-propelled device through the external positioning unit.

The charging pile detection unit is used for detecting whether the charging pile exists in the image using a deep learning program.

The second rough posture calculation unit is used for, when the confidence of the charging pile detected from the image is greater than or equal to a preset threshold, calculating the rough posture of the charging pile relative to the self-propelled device according to the preset position of the charging pile and the current position of the self-propelled device.

The second auxiliary information determination unit is used for calculating feature points according to the image and the three-dimensional model of the charging pile and using the feature points as the auxiliary information.

In some examples, the first auxiliary information determination unit is specifically used for performing the operations below.

According to the iconic information, target laser point cloud data corresponding to the charging pile is screened.

The yaw angle is calculated using the target laser point cloud data.

In some examples, the iconic information is an identification code.

In some examples, the iconic information is a QR code.

In some examples, the external positioning unit includes a satellite positioning device.

The self-propelled device position determination unit is specifically used for performing the operation below.

The current position is determined by receiving satellite signals through the satellite positioning device.

In some examples, the second auxiliary information determination unit is specifically used for performing the operations below.

A rendered image of the charging pile is obtained according to the three-dimensional model of the charging pile and the image.

Feature matching is performed on the image and the rendered image of the charging pile, and the feature points are calculated.

In some examples, the second auxiliary information determination unit includes a feature matching subunit specifically used for performing the operation below.

Feature matching is performed on the image and the rendered image of the charging pile using the SIFT or SURF.

In some examples, the accurate posture determination module is specifically used for performing the operation below.

Scale information of the charging pile is fixed using the rough posture, and in conjunction with the feature points, the accurate posture of the charging pile relative to the self-propelled device in the image is calculated.

The apparatus for determining the posture of a charging pile of a self-propelled device system provided in the example of the present application can perform the method for determining the posture of a charging pile of a self-propelled device system provided in any example of the present application and has function modules and beneficial effects corresponding to the performed method.

In solutions of the present application, the acquisition, storage, use, and processing of data all comply with relevant national laws and regulations and do not violate the public order and good customs.

It is to be understood that various forms of the preceding flows may be used, with steps reordered, added, or removed. For example, the steps described in the present application may be executed in parallel, in sequence, or in a different order as long as the desired results of the technical solutions of the present application can be achieved. The execution sequence of these steps is not limited herein.

The basic principles, main features, and advantages of the present application are shown and described above. It is to be understood by those skilled in the art that the preceding examples do not limit the present application in any form, and all technical solutions obtained through equivalent substitutions or equivalent transformations fall within the scope of the present application.

**Claims**

1. A self-propelled device system (10), comprising a self-propelled mower and a charging pile (200), wherein the charging pile is used for charging the self-propelled device, and the self-propelled mower (100) comprises:

   a body (110);
   a traveling wheel assembly (120) for supporting the body;
   a camera assembly (130) mounted on the body and used for collecting an image around the self-propelled device; and
   a controller (140) communicatively connected to the camera assembly and determining
   a relative posture between the charging pile and the self-propelled mower according to the image.

2. The self-propelled device system of claim 1, wherein the controller pre-stores three-dimensional feature points on the charging pile, and the three-dimensional feature points are pre-calibrated based on preset feature information;

   wherein the controller is configured to:

   acquire a target image corresponding to the charging pile collected by the camera assembly, and extract feature points from the target image based on the preset feature information to obtain two-dimensional feature points; and
   calibrate a parameter of the camera assembly based on a correspondence between the two-dimensional feature points and the three-dimensional feature points.

3. The self-propelled device system of claim 2, wherein the camera assembly comprises a binocular camera, the binocular camera comprises a left camera and a right camera, the target image comprises a first image and a second image, the first image is collected by the left camera, and the second image is collected by the right camera;

   wherein extracting the feature points from the target image based on the preset feature information to obtain the two-dimensional feature points comprises:

   extracting feature points from the first image based on the preset feature information to obtain first image two-dimensional feature points corresponding to the first image; and
   extracting feature points from the second image based on the preset feature information to obtain second image two-dimensional feature points corresponding to the second image;
   wherein calibrating the parameter of the camera assembly based on the correspondence between the two-dimensional feature points and the three-dimensional feature points comprises:

   determining a first intrinsic parameter of the left camera based on a correspondence between the first image two-dimensional feature points and the three-dimensional feature points; and
   determining a second intrinsic parameter of the right camera based on a correspondence between the second image two-dimensional feature points and the three-dimensional feature points.

4. The self-propelled device system of claim 3, wherein an intrinsic parameter comprises a focal length and an optical center.

5. The self-propelled device system of claim 3, wherein calibrating the parameter of the camera assembly based on the correspondence between the two-dimensional feature points and the three-dimensional feature points further comprises:

based on the first intrinsic parameter and the correspondence between the first image two-dimensional feature points and the three-dimensional feature points, determining a first extrinsic parameter of the left camera, wherein the first extrinsic parameter is used for representing relative posture information between the left camera and the charging pile;
based on the second intrinsic parameter and the correspondence between the second image two-dimensional feature points and the three-dimensional feature points, determining a second extrinsic parameter of the right camera, wherein the second extrinsic parameter is used for representing relative posture information between the right camera and the charging pile; and
determining a third extrinsic parameter of the binocular camera according to the first extrinsic parameter and the second extrinsic parameter, wherein the third extrinsic parameter is used for representing relative posture information between the left camera and the right camera.

6. The self-propelled device system of claim 2, wherein the preset feature information comprises structural information and additional mark information, wherein the structural information comprises at least one of the following: edge information, corner point information, and texture information, the additional mark information comprises preset pattern information, and the preset pattern information comprises quick-response code (QR code) information.

7. The self-propelled device system of claim 2, further comprising an infrared laser, wherein the camera assembly further comprises a low-light camera.

8. The self-propelled device system of claim 7, wherein the controller is further used for:

   determining a working scenario of the self-propelled mower, wherein the working scenario is daytime or nighttime;
   determining a working mode of the camera assembly in the self-propelled mower according to the working scenario;
   if the working scenario is daytime, determining that the working mode of the camera assembly is the low-light camera and a binocular camera in a first state or merely a binocular camera in a first state, wherein the first state is that the infrared laser is in an off state; and

if the working scenario is nighttime, determining that the working mode of the camera assembly is the low-light camera and the binocular camera in a second state, wherein the second state is that the infrared laser is in an on state.

9. The self-propelled device system of claim 1, wherein the camera assembly comprises a binocular camera, and the controller is used for:

performing target detection of a preset category on a current image collected by the camera assembly to obtain candidate detection bounding boxes;
determining one of the candidate detection bounding boxes as a target detection bounding box; and
based on the target detection bounding box, controlling the traveling wheel assembly to move.

10. The self-propelled device system of claim 9, wherein the candidate detection bounding boxes are a plurality of bounding boxes;
wherein determining one of the candidate detection bounding boxes as the target detection bounding box comprises:

determining a current depth map corresponding to the current image based on an image collected by the binocular camera;
determining candidate depth information corresponding to each of the candidate detection bounding boxes according to the current depth map;
performing information statistics on each piece of candidate depth information to obtain depth statistical information corresponding to each of the candidate detection bounding boxes; and
using a candidate detection bounding box corresponding to a minimum value in the depth statistical information as the target detection bounding box.

11. The self-propelled device system of claim 9, wherein the candidate detection bounding boxes are a plurality of bounding boxes;
wherein determining one of the candidate detection bounding boxes as the target detection bounding box comprises:

acquiring a reference image, wherein the reference image comprises a reference object of the preset category;
performing the target detection of the preset category on the reference image to obtain a reference detection bounding box;
determining a similarity between the reference detection bounding box and each of the candidate detection bounding boxes; and
using a candidate detection bounding box with a maximum similarity as the target detection bounding box.

12. The self-propelled device system of claim 9, wherein based on the target detection bounding box, controlling the traveling wheel assembly to move comprises:

determining target depth information corresponding to the target detection bounding box;
acquiring an intrinsic parameter of the binocular camera;
converting the target detection bounding box into a three-dimensional space according to the target depth information and the intrinsic parameter to obtain target point cloud information corresponding to the target detection bounding box; and
based on the target point cloud information, controlling the traveling wheel assembly to move.

13. A method for determining a posture of a charging pile (200) of a self-propelled device system (10), wherein the self-propelled device system comprises a self-propelled mower (100), the self-propelled mower comprises a camera assembly (130) and an auxiliary device, the auxiliary device comprises a laser sensor or the auxiliary device comprises an external positioning unit and a memory, the memory stores a preset position and a three-dimensional model of the charging pile, and the method for determining the posture comprises:

collecting an image through the camera assembly;
determining a rough posture of the charging pile relative to the self-propelled mower and auxiliary information according to the image and the auxiliary device; and
calculating an accurate posture of the charging pile relative to the self-propelled mower according to the rough posture and the auxiliary information.

14. The method for determining the posture of claim 13, wherein if the auxiliary device comprises the laser sensor,
determining the rough posture of the charging pile relative to the self-propelled mower and the auxiliary information according to the image and the auxiliary device comprises:

identifying iconic information of the charging pile from the image;

calculating the rough posture of the charging pile relative to the self-propelled mower according to the iconic information;

emitting laser light through the laser sensor;

according to the iconic information, screening out target laser point cloud data corresponding to the charging pile; and

calculating a yaw angle using the target laser point cloud data, and using the yaw angle as the auxiliary information.

15. The method for determining the posture of claim 13, wherein if the auxiliary device comprises the external positioning unit and the memory,

determining the rough posture of the charging pile relative to the self-propelled mower and the auxiliary information according to the image and the auxiliary device comprises:

acquiring a current position of the self-propelled mower through the external positioning unit;

detecting whether the charging pile exists in the image using a deep learning program;

when confidence of the charging pile detected from the image is greater than or equal to a preset threshold, calculating the rough posture of the charging pile relative to the self-propelled mower according to the preset position of the charging pile and the current position of the self-propelled device;

obtaining a rendered image of the charging pile according to the three-dimensional model of the charging pile and the image; and

performing feature matching on the image and the rendered image of the charging pile, calculating feature points, and using the feature points as the auxiliary information.

FIG. 1

FIG. 3

A1

Acquire a target image corresponding to the charging pile collected by the camera assembly, and extract feature points from the target image based on the preset feature information to obtain two-dimensional feature points

A2

Calibrate the parameter of the camera assembly based on the correspondence between the two-dimensional feature points and the three-dimensional feature points

FIG. 4

Pinhole imaging model

FIG. 5

FIG. 6

E1

Determine a working scenario of the self-propelled device, where the working scenario is daytime or nighttime

E2

Determine a working mode of the camera assembly in the self-propelled device according to the working scenario

FIG. 7

Controller — 140

Two-dimensional feature point extraction module — 1401

Camera assembly parameter calibration module — 1402

FIG. 8

Controller — 140

Self-propelled device working scenario determination module — 1403

Camera assembly working mode determination module — 1404

FIG. 9

G1

Perform target detection of a preset category on a current image collected by the camera assembly to obtain candidate detection bounding boxes

G2

Determine one of the candidate detection bounding boxes as a target detection bounding box

G3

Based on the target detection bounding box, control the traveling wheel assembly to move

FIG. 10

```
                                                                    ┌─ J1
┌──────────────────────────────────────────────────────────────────┐
│   Perform target detection of a preset category on a current image collected │
│   by the camera assembly to obtain candidate detection bounding boxes,       │
│        where the camera assembly includes a binocular camera                 │
└──────────────────────────────────────────────────────────────────┘
                                    │
                                    ▼
                                                                    ┌─ J2
┌──────────────────────────────────────────────────────────────────┐
│   Determine one of the candidate detection bounding boxes as a target        │
│                        detection bounding box                                │
└──────────────────────────────────────────────────────────────────┘
                                    │
                                    ▼
                                                                    ┌─ J3
┌──────────────────────────────────────────────────────────────────┐
│   Determine a current depth map corresponding to the current image based     │
│              on an image collected by the binocular camera                   │
└──────────────────────────────────────────────────────────────────┘
                                    │
                                    ▼
                                                                    ┌─ J4
┌──────────────────────────────────────────────────────────────────┐
│   Determine target depth information corresponding to the target detection   │
│            bounding box according to the current depth map                   │
└──────────────────────────────────────────────────────────────────┘
                                    │
                                    ▼
                                                                    ┌─ J5
┌──────────────────────────────────────────────────────────────────┐
│           Acquire an intrinsic parameter of the binocular camera             │
└──────────────────────────────────────────────────────────────────┘
                                    │
                                    ▼
                                                                    ┌─ J6
┌──────────────────────────────────────────────────────────────────┐
│   Convert the target detection bounding box into a three-dimensional space   │
│   according to the target depth information and the intrinsic parameter to   │
│   obtain target point cloud information corresponding to the target detection│
│                        bounding box                                          │
└──────────────────────────────────────────────────────────────────┘
                                    │
                                    ▼
                                                                    ┌─ J7
┌──────────────────────────────────────────────────────────────────┐
│   Determine target centroid coordinates corresponding to the target point    │
│                        cloud information                                     │
└──────────────────────────────────────────────────────────────────┘
                                    │
                                    ▼
                                                                    ┌─ J8
┌──────────────────────────────────────────────────────────────────┐
│   According to the target centroid coordinates, control the traveling wheel  │
│                        assembly to move                                      │
└──────────────────────────────────────────────────────────────────┘
```

FIG. 11

Controller                                    140

Candidate detection bounding
box determination module              141

Target detection bounding box
determination module                   142

Traveling wheel assembly
movement control module            143

FIG. 12

S110

Collect image data through the vision sensor

S120

According to the image data and the auxiliary device, determine the
rough posture of the charging pile relative to the self-propelled device and
auxiliary information

S130

Calculate the accurate posture of the charging pile relative to the self-
propelled device according to the rough posture and the auxiliary
information

FIG. 13

S210

Collect image data through the vision sensor

S220

Identify iconic information of the charging pile from the image data

S240

Emit laser light through the laser sensor

S230

Calculate the rough posture of the charging pile relative to the self-propelled device according to the iconic information

S250

Calculate a yaw angle between the laser light and the charging pile, and use the yaw angle as the auxiliary information

S260

Calculate the accurate posture of the charging pile relative to the self-propelled device according to the rough posture and the yaw angle

FIG. 14

S310

Collect image data through the vision sensor

S320

Acquire the current position of the self-propelled device through the positioning unit

S330

Detect whether the charging pile exists in the image data using a deep learning program

S340

When the confidence of the charging pile detected from the image data is greater than or equal to a preset threshold, calculate the rough posture of the charging pile relative to the self-propelled device according to the preset position of the charging pile and the current position of the self-propelled device

S350

Calculate feature points according to the image data and a three-dimensional model of the charging pile, and use the feature points as the auxiliary information

S360

Calculate the accurate posture of the charging pile relative to the self-propelled device according to the rough posture and the feature points

FIG. 15

| Image data collection module | 410 |

↓

| Rough posture and auxiliary information determination module | 420 |

↓

| Accurate posture determination module | 430 |

FIG. 16

## EUROPEAN SEARCH REPORT

**Application Number**

EP 24 20 5127

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 996 657 A (METOAK TECH SUZHOU CO LTD; METOAK TECH BEIJING CO LTD) 3 November 2023 (2023-11-03) | 1 | INV. G05D1/661 G05D1/229 |
| Y | * the whole document * | 2-6,9-12 | G05D1/243 |
| A | | 13-15 | G05D1/244 G05D1/686 |
| Y | US 2019/082156 A1 (ZHANG BOLUN [US] ET AL) 14 March 2019 (2019-03-14) * paragraphs [0002], [0003], [0042] - [0062] * | 2-6 | A01D34/00 G06T7/80 |
| Y | US 2022/024486 A1 (SCOTT TERRY [US] ET AL) 27 January 2022 (2022-01-27) * paragraphs [0006], [0071], [0087], [0088], [0091], [0099] - [0101], [0103]; figure 12A * | 9-12 | ADD. G05D101/20 G05D105/15 G05D107/20 G05D109/10 G05D111/10 G05D111/63 |
| X | EP 4 148 525 A1 (SUZHOU CLEVA PRECISION MACHINERY & TECH CO LTD [CN]) 15 March 2023 (2023-03-15) | 13,15 | |
| Y | * paragraphs [0018] - [0026]; figure 2 * | 14 | **TECHNICAL FIELDS SEARCHED (IPC)** |
| Y | US 2017/072558 A1 (REYNOLDS TODD P [US] ET AL) 16 March 2017 (2017-03-16) | 14 | G05D |
| A | * paragraphs [0007], [0045], [0059], [0060], [0073]; figures 2,5 * | 13,15 | G06T H04N |
| X | US 2023/286399 A1 (ZHOU KAI [CN] ET AL) 14 September 2023 (2023-09-14) | 1 | |
| Y | * abstract; figures 1a, 3a * | 2-6,9-12 | |
| A | | 13-15 | |
| X | US 2020/409382 A1 (HERMAN HERMAN [US] ET AL) 31 December 2020 (2020-12-31) | 1 | |
| Y | * paragraphs [0008], [0064] - [0081]; figures 2,4,8A * | 2-6,9-12 | |
| A | | 13-15 | |

The present search report has been drawn up for all claims

| Place of search | Date of completion of the search | Examiner |
|---|---|---|
| Munich | 13 March 2025 | Vañó Gea, Joaquín |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 24 20 5127

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-6, 9-15

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**LACK OF UNITY OF INVENTION**

**SHEET B**

The Search Division considers that the present European patent application does not comply with the requirements of unity of invention and relates to several inventions or groups of inventions, namely:

1. claims: 1-6

    A self-propelled device system comprising a self-propelled mower and a charging pile, as disclosed in D1 (=CN 116 996 657 A), using acquired two-dimensional feature points and pre-stored three-dimensional feature points for calibration of a camera, as rendered obvious by documents D1 and D2 (=US 2019/082156 A1), wherein the intrinsic and extrinsic parameters of a binocular camera are calibrated.
    - - -

2. claims: 7, 8

    A self-propelled device system comprising a self-propelled mower and a charging pile, as disclosed in D1, using acquired two-dimensional feature points and pre-stored three-dimensional feature points for calibration of a camera, as rendered obvious by documents D1 and D2, wherein an infrared laser and a low-light camera are used according to the time of day.
    - - -

3. claims: 9-12

    A self-propelled device system comprising a self-propelled mower and a charging pile, as disclosed in D1, wherein a target detection bounding box is determined for controlling the movement of the mower.
    - - -

4. claims: 13-15

    A self-propelled device system comprising a self-propelled mower and a charging pile, as disclosed in D1, wherein a rough relative posture is determined with a camera and an accurate relative posture is calculated with an auxiliary device.
    - - -

**ANNEX TO THE EUROPEAN SEARCH REPORT
ON EUROPEAN PATENT APPLICATION NO.**

EP 24 20 5127

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2025

| Patent document cited in search report | | Publication date | Patent family member(s) | | Publication date |
|---|---|---|---|---|---|
| CN 116996657 | A | 03-11-2023 | NONE | | |
| US 2019082156 | A1 | 14-03-2019 | NONE | | |
| US 2022024486 | A1 | 27-01-2022 | AU | 2019404207 A1 | 15-07-2021 |
| | | | EP | 3899683 A1 | 27-10-2021 |
| | | | US | 2022024486 A1 | 27-01-2022 |
| | | | WO | 2020132233 A1 | 25-06-2020 |
| EP 4148525 | A1 | 15-03-2023 | CN | 113703431 A | 26-11-2021 |
| | | | EP | 4148525 A1 | 15-03-2023 |
| | | | US | 2024103546 A1 | 28-03-2024 |
| | | | WO | 2021227335 A1 | 18-11-2021 |
| US 2017072558 | A1 | 16-03-2017 | NONE | | |
| US 2023286399 | A1 | 14-09-2023 | AU | 2023201490 A1 | 28-09-2023 |
| | | | AU | 2024227653 A1 | 14-11-2024 |
| | | | CA | 3192490 A1 | 09-09-2023 |
| | | | DK | 4242775 T3 | 28-10-2024 |
| | | | EP | 4242775 A1 | 13-09-2023 |
| | | | EP | 4406776 A2 | 31-07-2024 |
| | | | US | 2023286399 A1 | 14-09-2023 |
| US 2020409382 | A1 | 31-12-2020 | CN | 112004645 A | 27-11-2020 |
| | | | US | 2020409382 A1 | 31-12-2020 |
| | | | WO | 2019126332 A1 | 27-06-2019 |

EPO FORM P0459

For more details about this annex : see Official Journal of the European Patent Office, No. 12/82